# NEUE EUROPÄISCHE PATENTSCHRIFT

(11) **EP 2 346 321 B2**
(45) Veröffentlichungstag und Bekanntmachung des Hinweises auf die Entscheidung über den Einspruch: **18.05.2022**
(45) Hinweis auf die Patenterteilung: 28.01.2015
(21) Anmeldenummer: 09783537.5
(22) Anmeldetag: 29.09.2009
(51) Int. Cl.: A01N 25/02, A01N 25/30, A01N 43/56, A01N 43/80, A01P 13/00

(54) **ZUSAMMENSETZUNG ZUR VERBESSERUNG DER WIRKSAMKEIT VON HERBIZIDEN**
COMPOSITION FOR IMPROVING THE EFFICACY OF HERBICIDES
COMPOSITION DESTINÉE À AMÉLIORER L'EFFICACITÉ D'HERBICIDES

(30) Priorität: 30.09.2008 EP 08165527
(43) Veröffentlichungstag der Anmeldung: 27.07.2011
(73) Patentinhaber: BASF SE, 67056 Ludwigshafen am Rhein (DE)
(72) Erfinder: KRAPP, Michael, 67122 Altrip (DE); BERGHAUS, Rainer, 67346 Speyer (DE); BECKER, Markus, 67149 Meckenheim (DE); SIEVERNICH, Bernd, 67454 Hassloch (DE); VANTIEGHEM, Herve, R., 76297 Stutensee (DE)
(86) Internationale Anmeldenummer: PCT/EP2009/062598
(87) Internationale Veröffentlichungsnummer: WO 2010/037734

(56) Entgegenhaltungen:
- EP-A2- 0 394 847
- WO-A1-00/53014
- WO-A1-2006/050141
- WO-A2-2007/065026
- US-A- 4 834 908
- US-A- 4 834 908
- US-A- 5 084 087
- DATABASE CAPLUS [Online] CHEMICAL ABSTRACTS SERVICE, COLUMBUS, OHIO, US; 23. Oktober 1996 (1996-10-23), R. S. Tann, D. Haggard & P. M. McMullan: "Effect of various chain length methyl esters as agricultural tank mix adjuvants" XP002608684 gefunden im STN accession no. 1996:627973 Database accession no. 1996:627973 & R. S. TANN ET AL.: "Effect of various carbon chain length methyl esters as agricultural tank mix adjuvants" FRI BULLETIN, Bd. 193, Nr. Proc. of 4th Int.Symp.on adjuvants., 1995, Seiten 72-77,
- F. CABANNE, J. C. GAUDRY & J. C. STREIBERG: "Influence of alkyl oleates on efficacy of phenmedipham applied as an acetone:water solution on Galium aparine." WEED RESEARCH, Bd. 39, 1999, Seiten 57-67, XP002608685

## Beschreibung

Die vorliegende Erfindung betrifft eine neue Zusammensetzung zur Verbesserung der Wirksamkeit von Herbiziden, die Verwendung dieser Zusammensetzung zur Verbesserung der Wirksamkeit von Herbiziden, ein herbizides Mittel, das diese Zusammensetzung und wenigstens ein Herbizid enthält, und die Verwendung dieses herbiziden Mittels zur Bekämpfung von unerwünschtem Pflanzenwuchs.

Es ist allgemein bekannt, dass sowohl die Aufnahme als auch die Wirksamkeit vieler Pestizide, wie beispielsweise Herbizide, durch den Zusatz von Adjuvantien, sogenannten Boostern, verbessert werden kann. Der Wirkmechanismus dieser Zusätze ist komplex und kann nicht allein auf angepasste Oberflächeneigenschaften der Blattoberfläche zurückgeführt werden.

US 4834908 beschreibt ein ölbasiertes Adjuvans, umfassend einen Niederalkylester einer langkettigen Carbonsäure, ein anionisches Tensid, erhältlich durch Veresterung eines nichtionischen Polyoxyalkylen-Tensids mit einer zweiwertigen oder dreiwertigen anorganischen Säure oder durch Carboxylierung mit organischen Säurederivaten, eine langkettige Carbonsäure und eine Kohlenwasserstoff-Komponente.

WO 2006/050141 beschreibt eine Herbizidzusammensetzung, die neben einer wirksamen Konzentration eines Herbizids aus der Klasse der Cyclohexandionoxime, mindestens einen Fettsäureester, mindestens ein nichtionisches Tensid, ausgewählt aus Polyoxyethylen-Pflanzenölen und Polyoxyethylen-Sorbitancarboxylaten und gegebenenfalls ein anionisches Tensid und/oder ein kohlenwasserstoffbasiertes Lösungsmittel enthält.

EP 0394847 beschreibt Herbizidformulierungen, umfassend mindestens ein Herbizid, ein nichtionisches Polyoxyalkylen-Tensid, ein anionisches Tensid ausgewählt aus der Gruppe der Dialkylsulfosuccinat-Metallsalze und der Metallsalze alkyl-aromatischer Sulfonate, gegebenenfalls ein weiteres nichtionisches Polyoxyalkylen-Tensid und mindestens einen Niederalkylester einer langkettigen Carbonsäure.

Die WO 00/53014 beschreibt eine herbizide Zusammensetzung mit verbesserter Wirksamkeit, die neben einem Herbizid von einem Topramezon-Typ ein Adjuvans als Wirkverbesserer enthält. Dieses enthält ein C₁-C₅-Alkyl-C₅-C₂₂-alkanoat, eine C₁₀-C₂₀-Carbonsäure, einen partiellen Phosphor- oder Schwefelsäureester eines Monohydroxyfunktionellen Polyalkylethers und gegebenenfalls einen Alkylpolyoxyalkylenpolyether. Bevorzugte C₁-C₅-Alkyl-C₅-C₂₂-alkanoate sind Methyloleat, Methylpalmitat und Ethyloleat sowie Gemische davon. Konkret wird als C₁-C₅-Alkyl-C₅-C₂₂-alkanoat ein 1:1-Gemisch aus Methyloleat und Methylpalmitat eingesetzt.

Solche Wirkverbesserersysteme sind unter der Bezeichnung DASH^{®}, z.B. DASH^{®} HC, von der BASF Corporation, USA, kommerziell erhältlich.

Nachteilig bei diesem Wirkverbesserersystem ist, dass es bei niedrigeren Temperaturen, teilweise schon bei 10 °C, und/oder bei längerer Lagerung präzipitiert und fest wird. Da das Wirkverbesserersystem in der Regel im Sprühtank mit dem Herbizid gemischt wird, erschwert eine Präzipitierung die Dispergierbarkeit des Wirkverbesserers im Tankmix, und das Produkt wird nicht mehr in gleichmäßiger Konzentration auf die Pflanzen aufgebracht. Für die Gewährleistung einer guten Dispergierung muss der Wirkverbesserer erst erwärmt werden, um ihn in Lösung zu bringen, was natürlich seine Handhabung enorm erschwert.

Aufgabe der vorliegenden Erfindung war es daher, ein Wirkverbesserersystem bereitzustellen, welches weder bei niedrigen Temperaturen, z.B. bei oder unterhalb von 10 °C, insbesondere aber auch bei oder unterhalb von 0°C, z.B. bei oder unterhalb von -5 °C, noch bei längerer Lagerung Präzipitate bildet und damit besser handhabbar ist.

Die Erfinder der vorliegenden Anmeldung haben festgestellt, dass die Präzipitatbildung auf den Alkylalkanoatbestandteil zurückzuführen ist und dass diese verhindert werden kann, wenn das Alkylalkanoat eine bestimmte Zusammensetzung aufweist.

Die Aufgabe wird daher gelöst durch eine Zusammensetzung, bestehend aus:
(a) 20 bis 60 Gew.-%, bezogen auf das Gesamtgewicht der Komponenten (a), (b), (c), (d) und (e), wenigstens eines C₁-C₄-Alkylesters wenigstens einer aliphatischen C₁₄-C₂₂-Carbonsäure, wobei die wenigstens eine Carbonsäure zu wenigstens 70 Gew.-% aus aliphatischen Carbonsäuren mit 18 Kohlenstoffatomen besteht,
   wobei die aliphatischen Carbonsäuren mit 18 Kohlenstoffatomen der Komponente (a) ausgewählt sind unter gesättigten C₁₈-Carbonsäuren, einfach ungesättigten C₁₈-Carbonsäuren, zweifach ungesättigten C₁₈-Carbonsäuren, dreifach ungesättigten C₁₈-Carbonsäuren und Gemischen davon,
   wobei es sich bei den aliphatischen Carbonsäuren mit 18 Kohlenstoffatomen der Komponente (a) um ein Gemisch aus wenigstens einer gesättigten C₁₈-Carbonsäure, wenigstens einer einfach ungesättigten C₁₈-Carbonsäure, wenigstens einer zweifach ungesättigten C₁₈-Carbonsäure und wenigstens einer dreifach ungesättigten C₁₈-Carbonsäure handelt,
   wobei das Gemisch der C₁₈-Carbonsäuren die wenigstens eine einfach ungesättigte C₁₈-Carbonsäure in einer Menge von wenigstens 60 Gew.-% bezogen auf das Gesamtgewicht des Gemischs enthält;
(b) 10 bis 40 Gew.-%, bezogen auf das Gesamtgewicht der Komponenten (a), (b), (c), (d) und (e), wenigstens eines anionischen Tensids, das ausgewählt ist unter den Veresterungsprodukten von monohydroxyfunktionellen Alkylpolyethern mit anorganischen mehrprotonigen Säuren;
(c) 2 bis 15 Gew.-%, bezogen auf das Gesamtgewicht der Komponenten (a), (b), (c), (d) und (e), wenigstens einer aliphatischen C₁₄-C₂₂-Carbonsäure;
(d) 0 bis 0,5 Gew.-%, bezogen auf das Gesamtgewicht der Komponenten (a), (b), (c), (d) und (e), gegebenenfalls wenigstens eines Entschäumers; und
(e) wenigstens ein aromatisches Lösungsmittel ad 100 Gew.-%, bezogen auf das Gesamtgewicht der Komponenten (a), (b), (c), (d) und (e).

Im Rahmen der vorliegenden Erfindung haben generische Bezeichnungen von Resten folgende Bedeutungen:

Halogen steht im Rahmen der vorliegenden Erfindung für Fluor, Chlor oder Brom.

C₁-C₄-Alkyl steht für einen linearen oder verzweigten Alkylrest mit 1 bis 4 Kohlenstoffatomen. Beispiele hierfür sind Methyl, Ethyl, Propyl, Isopropyl, n-Butyl, sec-Butyl, Isobutyl und tert-Butyl.

C₁-C₆-Alkyl steht für einen linearen oder verzweigten Alkylrest mit 1 bis 6 Kohlenstoffatomen. Beispiele hierfür sind Methyl, Ethyl, Propyl, Isopropyl, n-Butyl, sec-Butyl, Isobutyl, tert-Butyl, Pentyl, Isopentyl, Neopentyl, Hexyl, Isohexyl und Stellungsisomere davon.

C₁-C₁₀-Alkyl steht für einen linearen oder verzweigten Alkylrest mit 1 bis 10 Kohlenstoffatomen. Beispiele hierfür sind neben den bereits bei C₁-C₆-Alkyl genannten Beispielen Heptyl, Octyl, 2-Ethylhexyl, Nonyl und Decyl sowie Stellungsisomere davon.

C₁-C₆-Haloalkyl steht für einen C₁-C₆-Alkylrest, in dem wenigstens ein Wasserstoffatom durch ein Halogenatom, z. B. durch F, Cl oder Br ersetzt ist. Vorzugsweise steht C₁-C₆-Haloalkyl für C₁-C₄-Haloalkyl, d.h. für einen C₁-C₄-Alkylrest, in dem wenigstens ein Wasserstoffatom durch ein Halogenatom, z. B. durch F, Cl oder Br ersetzt ist. Beispiele hierfür sind Chlormethyl, Dichlormethyl, Trichlormethyl, Fluormethyl, Difluormethyl, Trifluormethyl, 1,1-Difluorethyl, 2,2,2-Trifluorethyl, Pentafluorethyl, 3,3,3-Trifluorpropyl, 1,1-Dichlorethyl, 2,2,2-Trichlorethyl, Pentachlorethyl, 3,3,3-Trichlorpropyl und dergleichen.

C₁-C₆-Alkoxy steht für einen C₁-C₆-Alkylrest, der über ein Sauerstoffatom gebunden ist. Beispiele hierfür sind Methoxy, Ethoxy, Propoxy, Isopropoxy, n-Butoxy, 2-Butoxy, Isobutoxy, tert-Butoxy, Pentoxy und Hexoxy sowie Stellungsisomere davon.

C₁-C₆-Haloalkoxy steht für einen C₁-C₆-Haloalkylrest, der über ein Sauerstoffatom gebunden ist. Beispiele hierfür sind Chlormethoxy, Dichlormethoxy, Trichlormethoxy, Fluormethoxy, Difluormethoxy, Trifluormethoxy, 1,1-Difluorethoxy, 2,2,2-Trifluorethoxy, Pentafluorethoxy, 3,3,3-Trifluorpropoxy, 1,1-Dichlorethoxy, 2,2,2-Trichlorethoxy, Pentachlorethoxy, 3,3,3-Trichlorpropoxy und dergleichen.

C₁-C₆-Alkylthio steht für einen C₁-C₆-Alkylrest, der über ein Schwefelatom gebunden ist. Beispiele hierfür sind Methylthio, Ethylthio, Propylthio, Isopropylthio, n-Butylthio, 2-Butylthio, Isobutylthio, tert-Butylthio, Pentylthio und Hexylthio sowie Stellungsisomere davon.

C₁-C₆-Haloalkylthio steht für einen C₁-C₆-Haloalkylrest, der über ein Schwefelatom gebunden ist. Beispiele hierfür sind Chlormethylthio, Dichlormethylthio, Trichlormethylthio, Fluormethylthio, Difluormethylthio, Trifluormethylthio, 1,1-Difluorethylthio, 2,2,2-Trifluorethylthio, Pentafluorethylthio, 3,3,3-Trifluorpropylthio, 1,1-Dichlorethylthio, 2,2,2-, Trichlorethylthio, Pentachlorethylthio, 3,3,3-Trichlorpropylthio und dergleichen.

C₁-C₆-Alkylsulfinyl steht für einen C₁-C₆-Alkylrest, der über eine SO-Gruppe gebunden ist. Beispiele hierfür sind Methylsulfinyl, Ethylsulfinyl, Propylsulfinyl, Isopropylsulfinyl, n-Butylsulfinyl, 2-Butylsulfinyl, Isobutylsulfinyl, tert-Butylsulfinyl, Pentylsulfinyl und Hexylsulfinyl sowie Stellungsisomere davon.

C₁-C₆-Haloalkylsulfinyl steht für einen C₁-C₆₇-Haloalkylrest, der über eine SO-Gruppe gebunden ist. Beispiele hierfür sind Chlormethylsulfinyl, Dichlormethylsulfinyl, Trichlormethylsulfinyl, Fluormethylsulfinyl, Difluormethylsulfinyl, Trifluormethylsulfinyl, 1,1-Difluorethylsulfinyl, 2,2,2-Trifluorethylsulfinyl, Pentafluorethylsulfinyl, 3,3,3-Trifluorpropylsulfinyl, 1,1-Dichlorethylsulfinyl, 2,2,2-Trichlorethylsulfinyl, Pentachlorethylsulfinyl, 3,3,3-Trichlorpropylsulfinyl und dergleichen.

C₁-C₆-Alkylsulfonyl steht für einen C₁-C₆-Alkylrest, der über eine SO₂-Gruppe gebunden ist. Beispiele hierfür sind Methylsulfonyl, Ethylsulfonyl, Propylsulfonyl, Isopropylsulfonyl, n-Butylsulfonyl, 2-Butylsulfonyl, Isobutylsulfonyl, tert-Butylsulfonyl, Pentylsulfonyl und Hexylsulfonyl sowie Stellungsisomere davon.

C₁-C₆-Haloalkylsulfonyl steht für einen C₁-C₆-Haloalkylrest, der über eine SO₂-Gruppe gebunden ist. Beispiele hierfür sind Chlormethylsulfonyl, Dichlormethylsulfonyl, Trichlormethylsulfonyl, Fluormethylsulfonyl, Difluormethylsulfonyl, Trifluormethylsulfonyl, 1,1-Difluorethylsulfonyl, 2,2,2-Trifluorethylsulfonyl, Pentafluorethylsulfonyl, 3,3,3-Trifluorpropylsulfonyl, 1,1-Dichlorethylsulfonyl, 2,2,2-Trichlorethylsulfonyl, Pentachlorethylsulfonyl, 3,3,3-Trichlorpropylsulfonyl und dergleichen.

Aliphatische C₁₄-C₂₂-Carbonsäuren sind Monocarbonsäuren der Formel R-COOH, worin R für einen aliphatischen Rest mit 13 bis 21 Kohlenstoffatomen stehen. Bei dem aliphatischen Rest kann es sich um C₁₃-C₂₁-Alkyl, C₁₃-C₂₁-Alkenyl, C₁₃-C₂₁-Alkadienyl, C₁₃-C₂₁-Alkatrienyl, C₁₃-C₂₁-Alkatetraenyl, C₁₃-C₂₁-Alkapentaenyl, C₁₃₋C₂₁-Alkahexaenyl oder C₁₃-C₂₁-Alkinyl handeln. Ist der aliphatische Rest ein Alkylrest, so ist die aliphatische Carbonsäure eine gesättigte Carbonsäure; ist der aliphatische Rest ein Alkenylrest, so ist die aliphatische Carbonsäure eine einfach ungesättigte Carbonsäure; ist der aliphatische Rest ein Alkadienylrest, so ist die aliphatische Carbonsäure eine zweifach ungesättigte Carbonsäure; ist der aliphatische Rest ein Alkatrienylrest, so ist die aliphatische Carbonsäure eine dreifach ungesättigte Carbonsäure; ist der aliphatische Rest ein Alkatetraenylrest, so ist die aliphatische Carbonsäure eine vierfach ungesättigte Carbonsäure; ist der aliphatische Rest ein Alkapentaenylrest, so ist die aliphatische Carbonsäure eine fünffach ungesättigte Carbonsäure; und ist der aliphatische Rest ein Alkahexaenylrest, so ist die aliphatische Carbonsäure eine sechsfach ungesättigte Carbonsäure. Der aliphatische Rest kann linear oder verzweigt sein; vorzugsweise ist er jedoch unverzweigt (linear). Die aliphatischen C₁₄-C₂₂-Carbonsäuren können natürlichen Ursprungs oder synthetisch sein. Beispiele für natürlich vorkommende aliphatische C₁₄-C₂₂-Carbonsäuren sind Myristinsäure, Pentadecansäure, Palmitinsäure, Margarinsäure, Stearinsäure, Nonadecansäure, Arachinsäure, Behensäure (gesättigte, unverzweigte Fettsäuren), Palmitoleinsäure, Ölsäure, Erucasäure (einfach ungesättigte, unverzweigte Fettsäuren), Linolsäure (zweifach ungesättigte, unverzweigte Fettsäure), Linolensäure, Elaeostearinsäure (dreifach ungesättigte, unverzweigte Fettsäuren), Arachidonsäure (vierfach ungesättigte, unverzweigte Fettsäure), Clupanodonsäure (fünffach ungesättigte, unverzweigte Fettsäure) und Docosahexaensäure (sechsfach ungesättigte, unverzweigte Fettsäure).

C₂-C₄-Alkylenoxide sind Epoxidverbindungen von C₂-C₄-Alkenen. Beispiele sind Ethylenoxid, Propylenoxid und Butylenoxid.

C₁₆-C₂₀-Alkanole sind Alkane mit 16 bis 20 Kohlenstoffatomen, in denen ein Wasserstoffatom durch eine OH-Gruppe ersetzt ist. Beispiele sind Hexadecanol, Heptadecanol, Octadecanol, Nonadecanol, Eicosanol und die Stellungsisomere davon.

C₁₀-C₂₀-Alkanole sind Alkane mit 10 bis 20 Kohlenstoffatomen, in denen ein Wasserstoffatom durch eine OH-Gruppe ersetzt ist. Beispiele sind neben den zuvor für C₁₆-C₂₀-Alkanole genannten Verbindungen Decanol, 2-Propylheptanol, Undecanol, Dodecanol, Tridecanol, Tetradecanol, Pentadecanol und die Stellungsisomere davon.

C₁-C₂₀-Alkanole sind Alkane mit 1 bis 20 Kohlenstoffatomen, in denen ein Wasserstoffatom durch eine OH-Gruppe ersetzt ist. Beispiele sind neben den zuvor für C₁₀-C₂₀-Alkanole genannten Verbindungen Methanol, Ethanol, Propanol, Isopropanol, Butanol, sec-Butanol, Isobutanol, tert-Butanol, Pentanol, Hexanol, Heptanol, Octanol, 2-Ethylhexanol, Nonanol und die Stellungsisomere davon.

Die im Folgenden gemachten Angaben zu bevorzugten Merkmalen der erfindungsgemäßen Zusammensetzungen und ihrer Verwendung gelten sowohl allein für sich genommen als auch insbesondere in jeder denkbaren Kombination miteinander.

Erfindungsgemäß besteht die wenigstens eine aliphatische C₁₄-C₂₂-Carbonsäure der Komponente (a) zu wenigstens 70 Gew.-%, z.B. zu 70 bis 98 Gew.-%, bevorzugt 70 bis 95 Gew.-% oder 70 bis 92 Gew.-%, aus aliphatischen Carbonsäuren mit 18 Kohlenstoffatomen. Das bedeutet, dass die wenigstens eine aliphatische C₁₄-C₂₂-Carbonsäure 0 bis 30 Gew.-% C₁₄-C₁₇- und/oder C₁₉-C₂₂-Carbonsäuren, bezogen auf das Gesamtgewicht aller aliphatischen C₁₄-C₂₂-Carbonsäuren der Komponente (a), enthält. In einer bevorzugten Ausführungsform der Erfindung besteht die wenigstens eine aliphatische C₁₄-C₂₂-Carbonsäure der Komponente (a) zu wenigstens 75 Gew.-%, z.B. zu 75 bis 98 Gew.-%, bevorzugt 75 bis 95 Gew.-% oder 75 bis 92 Gew.-%; besonders bevorzugt zu wenigstens 80 Gew.-%, z.B. zu 80 bis 98 Gew.-%, bevorzugt 80 bis 95 Gew.-% oder 80 bis 92 Gew.-%; stärker bevorzugt zu wenigstens 85 Gew.-%, z.B. zu 85 bis 98 Gew.-%, bevorzugt 85 bis 95 Gew.-% oder 85 bis 92 Gew.-%; und insbesondere zu wenigstens 90 Gew.-%, z.B. zu 90 bis 98 Gew.-%, bevorzugt 90 bis 95 Gew.-% oder 90 bis 92 Gew.-%, aus aliphatischen Carbonsäuren mit 18 Kohlenstoffatomen.

Die Komponente (a) enthält wenigstens 70 Gew.-%, z.B. 70 bis 98 Gew.-%, z.B. 70 bis 95 Gew.- % oder 70 bis 92 Gew.-%; bevorzugt wenigstens 75 Gew.-%, z.B. 75 bis 98 Gew.-%, bevorzugt 75 bis 95 Gew.-% oder 75 bis 92 Gew.-%; besonders bevorzugt wenigstens 80 Gew.-%, z.B. 80 bis 98 Gew.-%, bevorzugt 80 bis 95 Gew.-% oder 80 bis 92 Gew.-%; stärker bevorzugt wenigstens 85 Gew.-%, z.B. 85 bis 98 Gew.-%, bevorzugt 85 bis 95 Gew.-% oder 85 bis 92 Gew.-%; und insbesondere wenigstens 90 Gew.-%, z.B. 90 bis 98 Gew.-%, bevorzugt 90 bis 95 Gew.-% oder 90 bis 92 Gew.-%, wenigstens eines C₁-C₄-Alkylesters wenigstens einer aliphatischen C₁₈-Carbonsäure, bezogen auf das Gesamtgewicht aller C₁-C₄-Alkylester der wenigstens einen aliphatischen C₁₄-C₂₂-Carbonsäure der Komponente (a).

Bei dem C₁-C₄-Alkylester der Komponente (a) handelt es sich vorzugsweise um den Methyl- oder Ethylester oder Gemische davon und insbesondere um den Methylester.

Die aliphatischen Carbonsäuren mit 18 Kohlenstoffatomen der Komponente (a) sind ausgewählt unter gesättigten C₁₈-Carbonsäuren, einfach ungesättigten C₁₈-Carbonsäuren, zweifach ungesättigten C₁₈-Carbonsäuren, dreifach ungesättigten C₁₈-Carbonsäuren und Gemischen davon. Erfindungsgemäß handelt es sich bei den aliphatischen Carbonsäuren mit 18 Kohlenstoffatomen der Komponente (a) um ein Gemisch aus wenigstens einer gesättigten C₁₈-Carbonsäure, wenigstens einer einfach ungesättigten C₁₈-Carbonsäure, wenigstens einer zweifach ungesättigten C₁₈-Carbonsäure und wenigstens einer dreifach ungesättigten C₁₈-Carbonsäure.

Erfindungsgemäß enthält das Gemisch der C₁₈-Carbonsäuren die wenigstens eine einfach ungesättigte C₁₈-Carbonsäure in einer Menge von wenigstens 60 Gew.-%, vorzugsweise von wenigstens 65 Gew.-%, insbesondere von wenigstens 70 Gew.-%, z.B. von 60 bis 95 Gew.-%, oder 65 bis 95 Gew.-%, oder 70 bis 95 Gew.-%, vorzugsweise 70 bis 90 Gew.-%, besonders bevorzugt 70 bis 85 Gew.-% und insbesondere 70 bis 80 Gew.-%; besonders bevorzugt von wenigstens 75 Gew.-%, z.B. von 75 bis 95 Gew.-%, vorzugsweise 75 bis 90 Gew.-%, besonders bevorzugt 75 bis 85 Gew.-% und insbesondere 75 bis 80 Gew.-%; und insbesondere wenigstens von 78 Gew.-%, z.B. von 78 bis 95 Gew.-%, vorzugsweise 78 bis 90 Gew.-%, besonders bevorzugt 78 bis 85 Gew.-% und insbesondere 78 bis 80 Gew.- %; bezogen auf das Gesamtgewicht des Gemischs, wobei die Gesamtmenge an C₁₈-Carbonsäuren wenigstens 70 Gew.-%, z.B. 70 bis 98 Gew.-%, bevorzugt 75 bis 95 Gew.-% beträgt.

Die wenigstens eine zweifach ungesättigte C₁₈-Carbonsäure ist im Gemisch der C₁₈-Carbonsäuren vorzugsweise in einer Menge von wenigstens 10 Gew.-%, z.B. von 10 bis 20 Gew.-%, bevorzugt 10 bis 18 Gew.-% und insbesondere 10 bis 16 Gew.-%; besonders bevorzugt von wenigstens 15 Gew.-%, z.B. von 15 bis 20 Gew.-%, bevorzugt 15 bis 18 Gew.-% und insbesondere 15 bis 16 Gew.-%; bezogen auf das Gesamtgewicht des Gemischs, enthalten.

Die wenigstens eine dreifach ungesättigte C₁₈-Carbonsäure ist im Gemisch der C₁₈-Carbonsäuren vorzugsweise in einer Menge von 2 bis 6 Gew.-%, besonders bevorzugt 3 bis 5 Gew.-% und insbesondere von etwa 4 Gew.-%, bezogen auf das Gesamtgewicht des Gemischs, enthalten.

Die wenigstens eine gesättigte C₁₈-Carbonsäure ist im Gemisch der C₁₈-Carbonsäuren vorzugsweise in einer Menge von 0,8 bis 4 Gew.-%, besonders bevorzugt 1 bis 2 Gew.-%, bezogen auf das Gesamtgewicht des Gemischs, enthalten.

Bevorzugt umfasst die wenigstens eine einfach ungesättigte C₁₈-Carbonsäure Ölsäure. Besonders besteht dabei die wenigstens eine einfach ungesättigte C₁₈-Carbonsäure zu wenigstens 90 Gew.-%, besonders bevorzugt zu wenigstens 95 Gew.-% und insbesondere zu wenigstens 98 Gew.-% aus Ölsäure.

Bevorzugt umfasst die wenigstens eine gesättigte C₁₈-Carbonsäure Stearinsäure. Besonders besteht dabei die wenigstens eine gesättigte C₁₈-Carbonsäure zu wenigstens 90 Gew.-%, besonders bevorzugt zu wenigstens 95 Gew.-% und insbesondere zu wenigstens 98 Gew.-% aus Stearinsäure.

Bevorzugt umfasst die wenigstens eine zweifach ungesättigte C₁₈-Carbonsäure Linolsäure. Besonders besteht dabei die wenigstens eine zweifach ungesättigte C₁₈-Carbonsäure zu wenigstens 90 Gew.-%, besonders bevorzugt zu wenigstens 95 Gew.-% und insbesondere zu wenigstens 98 Gew.-% aus Linolsäure.

Bevorzugt umfasst die wenigstens eine dreifach ungesättigte C₁₈-Carbonsäure Linolensäure und/oder Elaeostearinsäure. Besonders besteht dabei die wenigstens eine dreifach ungesättigte C₁₈-Carbonsäure zu wenigstens 90 Gew.-%, besonders bevorzugt zu wenigstens 95 Gew.-% und insbesondere zu wenigstens 98 Gew.-% aus Linolensäure und/oder Elaeostearinsäure.

Die Komponente (a) umfasst neben dem wenigstens einen C₁-C₄-Alkylester der wenigstens einen aliphatischen C₁₈-Carbonsäure vorzugsweise noch wenigstens einen C₁-C₄-Alkylester wenigstens einer aliphatischen C₁₄- und/oder C₁₆-Carbonsäure. Bei dem C₁-C₄-Alkylester handelt es sich vorzugsweise um den Methyl- oder Ethylester oder um Gemische davon und insbesondere um den Methylester. Bei der C₁₄-Carbonsäure handelt es sich vorzugsweise um Myristinsäure. Bei der C₁₆-Carbonsäure handelt es sich vorzugsweise um Palmitinsäure, Palmitoleinsäure oder ein Gemisch davon. Vorzugsweise enthält Komponente (a) diese Ester in einer Menge von höchstens 20 Gew.-%, z.B. von 1 bis 20 Gew.-% oder vorzugsweise 5 bis 20 Gew.-%; besonders bevorzugt höchstens 15 Gew.-%, z.B. von 1 bis 15 Gew.-% oder vorzugsweise 5 bis 15 Gew.-%; und insbesondere von höchstens 10 Gew.-%, z.B. von 1 bis 10 Gew.-% oder vorzugsweise 5 bis 10 Gew.-%; bezogen auf das Gesamtgewicht aller C₁-C₄-Alkylester der wenigstens einen aliphatischen C₁₄-C₂₂-Carbonsäure.

C₁-C₄-Alkylester von aliphatischen C₁₄-C₂₂-Carbonsäuren, die die erfindungsgemäßen und bevorzugten Merkmale aufweisen, sind kommerziell erhältlich, beispielsweise unter der Bezeichnung Edenor^{®} ME Ti 05 (oder Synative^{®} ES ME Ti 05) von Cognis. Dieses Produkt wird im Rahmen der vorliegenden Erfindung besonders bevorzugt als Komponente (a) eingesetzt.

Im wenigstens einen anionischen Tensid der Komponente (b) ist der Ester in der Regel ein Teilester (im Folgenden auch Halbester), das heißt, die mehrprotonige anorganische Säure ist nur teilweise verestert. Die anorganische mehrprotonige Säure ist in der Regel eine mehrprotonige Oxosäure, die vorzugsweise ausgewählt ist unter Schwefelsäure und Phosphorsäure; besonders bevorzugt handelt es sich um Phosphorsäure. Bei den Estern handelt es sich bei der Schwefelsäure in der Regel um den Halbester, (d.h. nur ein Proton bzw. eine OH-Gruppe der Schwefelsäure ist verestert); auch die Phosphorsäure ist vorzugsweise nur teilverestert und bei der Komponente (b) handelt es sich um den Mono- oder Diester oder insbesondere um ein Gemisch aus Mono- und Diestern der Phosphorsäure. Das anionische Tensid kann herstellungsbedingt auch gewisse Anteile an vollständig verestertem Produkt enthalten. In diesem Fall macht das vollständig veresterte Produkt in der Regel nicht mehr als 50 Gew.-%, insbesondere nicht mehr als 30 Gew.-%, bezogen auf die eingesetzte Menge an Komponente (b) aus.

Die Ester sind in der Regel dadurch erhältlich, dass man monohydroxyfunktionelle AI-kylpolyether (Polyoxyalkylenether) mit der mehrprotonigen, anorganischen Säure oder einem geeigneten Derivat davon, z.B. mit ihrem Chlorid, z.B. mit Schwefelsäure, Phosphorsäure oder POCl₃, umsetzt; vorzugsweise in einer solchen Stöchiometrie oder unter solchen Bedingungen, dass die Säure nur teilverestert wird. Die verwendeten monohydroxyfunktionelle Alkylpolyether sind im Allgemeinen kommerziell erhältlich. Sie sind beispielsweise durch Oxyalkylierung, insbesondere Ox-C₂-C₄-alkylierung von Alkanolen, vorzugsweise von C₁-C₄₀-Alkanolen und bevorzugt von langkettigen Alkanolen, vorzugsweise von C₁₀-C₃₀- und insbesondere von C₁₀-C₂₀-Alkanolen, mit Alkylenoxiden, vorzugsweise mit C₂-C₄-Alkylenoxiden, wie Ethylenoxid, Propylenoxid, Butylenoxid oder Gemischen davon, insbesondere mit Ethylenoxid oder einer Mischung aus Ethylenoxid und Propylenoxid und speziell mit Ethylenoxid, erhältlich. Bevorzugte monohydroxyfunktionelle Alkylpolyether weisen ein Molekulargewicht von 400 bis 3000 und insbesondere von 600 bis 1200 auf. Besonders bevorzugt sind sie durch Umsetzung mit 5 bis 20, insbesondere 10 bis 15 Mol Ethylenoxid und gegebenenfalls 1 bis 10, vorzugsweise 2 bis 6 Mol Propylenoxid, pro Mol Alkanol, erhältlich.

Besonders bevorzugt ist das wenigstens eine anionische Tensid ausgewählt unter Phosphorsäureteilestern wenigstens eines monohydroxyfunktionellen Alkylpolyethers. Bezüglich geeigneter und bevorzugter monohydroxyfunktioneller Alkylpolyether gilt das zuvor Gesagte.

Die anionischen Tenside werden in der Regel in Form ihrer Salze, insbesondere in Form ihrer Alkalimetall-, Ammonium- oder substituierten Ammoniumsalze verwendet. Unter substituierten Amoniumsalzen versteht man die Salze von primären, sekundären oder tertiären Alkyl- oder Hydroxyalkylaminen. Bevorzugt sind die Alkalkimetallsalze, insbesondere die Natrium- und Kaliumsalze sowie die Ammoniumsalze (NH₄⁺-Salze).

Insbesondere verwendet man kommerziell erhältliche Produkte wie Klearfac^{®} AA 270 der BASF Corporation, Mt. Olive, NJ, USA oder Lutensit^{®} A-EP der BASF SE. Lutensit^{®} A-EP ist dabei stärker bevorzugt. In beiden Fällen handelt es sich um die Natriumsalze von Phosphorsäuremono- und diestern monohydroxyfunktioneller Alkylpolyether auf Basis ethoxylierter bzw. ethoxyiliert-co-propoxylierter Alkanole.

Bei der wenigstens einen aliphatischen C₁₄-C₂₂-Carbonsäure der Komponente (c) kann es sich sowohl um synthetische Carbonsäuren als auch um solche natürlichen Ursprungs handeln. Vorzugsweise handelt es sich um solche natürlichen Ursprungs.

Die Carbonsäure kann gesättigt oder ein- oder mehrfach ungesättigt sein. Sie kann auch ein Gemisch verschiedener Säuren sein. Beispiele für geeignete Carbonsäuren sind Myristinsäure, Pentadecansäure, Palmitinsäure, Margarinsäure, Stearinsäure, Nonadecansäure, Arachinsäure, Behensäure (gesättigte, unverzweigte Fettsäuren), Palmitoleinsäure, Ölsäure, Erucasäure (einfach ungesättigte, unverzweigte Fettsäuren), Linolsäure (zweifach ungesättigte, unverzweigte Fettsäure), Linolensäure, Elaeostearinsäure (dreifach ungesättigte, unverzweigte Fettsäuren), Arachidonsäure (vierfach ungesättigte, unverzweigte Fettsäure), Clupanodonsäure (fünffach ungesättigte, unverzweigte Fettsäure) und Docosahexaensäure (sechsfach ungesättigte, unverzweigte Fettsäure). Bevorzugt umfasst die wenigstens eine aliphatische C₁₄-C₂₂-Carbonsäure Ölsäure. Bevorzugt beträgt dabei der Anteil an Ölsäure wenigstens 80 Gew.-%, besonders bevorzugt wenigstens 85 Gew.-%, stärker bevorzugt wenigstens 90 Gew.-%, noch stärker bevorzugt wenigstens 95 Gew.-% und insbesondere wenigstens 98 Gew.-%, bezogen auf das Gesamtgewicht aller aliphatischen C₁₄-C₂₂-Carbonsäuren der Komponente (c). Speziell ist die wenigstens eine aliphatische C₁₄-C₂₂-Carbonsäure Ölsäure; d.h. der Anteil an eventuell vorhandenen davon verschiedenen Bestandteilen ist technisch bedingt und liegt unter 2 Gew.-% und meist sogar unter 1 Gew.-%.

Der in der erfindungsgemäßen Booster-Zusammensetzung gegebenenfalls enthaltene wenigstens eine Entschäumer (d) verhindert die Schaumbildung und ist vorzugsweise unter üblichen Entschäumern für Pflanzenschutzformulierungen ausgewählt. Geeignet sind beispielsweise Entschäumer auf Siloxan-Basis (z.B. Silikon^{®} SRE von Wacker oder Rhodorsil^{®} von Rhodia), langkettige Alkohole, Fettsäuren und Fettsäuresalze, z.B. Magnesiumstearat. Vorzugsweise ist der Entschäumer ein solcher auf Siloxan-Basis, insbesondere ein Trimethylsiloxan wie Silikon^{®} SRE von Wacker.

Vorzugsweise enthält die erfindungsgemäße Zusammensetzung wenigstens einen Entschäumer (d).

Geeignete aromatische Lösungsmittel sind vor allem Alkyl-substituierte Aromaten, wie Toluol, die Xylole, Ethylbenzole und Benzole mit längerkettigen Alkylresten, z.B. C₉-C₁₀-Dialkyl- und Trialkylbenzole (z.B. unter dem Namen Solvesso^{®} 100 von Exxon Mobile Europe oder Aromatic 100 von Exxon Mobile USA erhältlich), C₁₀-C₁₁-Alkylbenzole (z.B. unter dem Namen Solvesso^{®} 150 von Exxon Mobile Europe oder Aromatic 150 von Exxon Mobile USA erhältlich) und Alkylnaphthaline (z.B. unter dem Namen Solvesso^{®} 200 von Exxon Mobile Europe oder Aromatic 200 von Exxon Mobile USA erhältlich). Geeignet sind auch Gemische der vorgenannten Aromaten. Bevorzugt sind hierunter die mit höheren Alkylresten substituierten Benzole, wie C₉-C₁₀-Dialkyl- und Trialkylbenzole und insbesondere C₁₀-C₁₁-Alkylbenzole (Solvesso^{®} bzw. Aromatic 100 und insbesondere 150).

Besonders bevorzugt enthält das wenigstens eine aromatische Lösungsmittel höchstens 5 Gew.-%, stärker bevorzugt höchstens 2 Gew.-% und insbesondere höchstens 1 Gew.-%, bezogen auf das Gesamtgewicht des aromatischen Lösungsmittels, Naphthalin. Solche Lösungsmittel mit höchstens 1 Gew.-% Naphthalingehalt sind beispielweise bei Exxon Mobile Europe mit der Kennzeichnung ND (naphthalene depleted) kommerziell erhältlich, beispielsweise Solvesso^{®} 150 ND und Solvesso^{®} 200 ND von Exxon Mobile Europe. Noch geringere Naphthalingehalte von maximal 0,1 Gew.-% sind in den Produkten Aromatic 150 ULN und Aromatic 200 ULN von Exxon Mobile USA enthalten. Speziell wird Solvesso^{®} 150 ND als Komponente (e) eingesetzt.

In der erfindungsgemäßen Zusammensetzung sind die Komponenten (a) bis (e) vorzugsweise in folgenden Mengen enthalten:

Bevorzugt sind die Komponenten (a) bis (e) in folgenden Mengen enthalten:
(a) 25 bis 45 Gew.-%, bezogen auf das Gesamtgewicht der Komponenten (a), (b), (c), (d) und (e);
(b) 15 bis 30 Gew.-%, bezogen auf das Gesamtgewicht der Komponenten (a), (b), (c), (d) und (e);
(c) 2 bis 10 Gew.-%, bezogen auf das Gesamtgewicht der Komponenten (a), (b), (c), (d) und (e);
(d) 0 bis 0,5 Gew.-%, z. B. 0,005 bis 0,1 Gew.-%, bezogen auf das Gesamtgewicht der Komponenten (a), (b), (c), (d) und (e);
(e) ad 100 Gew.-%, bezogen auf das Gesamtgewicht der Komponenten (a), (b), (c), (d) und (e).

Insbesondere sind die Komponenten (a) bis (e) in folgenden Mengen enthalten:
(a) 35 bis 40 Gew.-%, bezogen auf das Gesamtgewicht der Komponenten (a), (b), (c), (d) und (e);
(b) 20 bis 25 Gew.-%, bezogen auf das Gesamtgewicht der Komponenten (a), (b), (c), (d) und (e);
(c) 3 bis 7 Gew.-%, bezogen auf das Gesamtgewicht der Komponenten (a), (b), (c), (d) und (e);
(d) 0 bis 0,5 Gew.-%, z. B. 0,005 bis 0,1 Gew.-%, bezogen auf das Gesamtgewicht der Komponenten (a), (b), (c), (d) und (e);
(e) ad 100 Gew.-%, bezogen auf das Gesamtgewicht der Komponenten (a), (b), (c), (d) und (e).

Speziell sind die Komponenten (a) bis (e) in folgenden Mengen enthalten:
(a) 35 bis 40 Gew.-%, noch spezieller 37,5 Gew.-%, bezogen auf das Gesamtgewicht der Komponenten (a), (b), (c), (d) und (e); als C₁-C₄-Alkylester der wenigstens einer aliphatischen C₁₄-C₂₂-Carbonsäure wird dabei speziell Edenor^{®} Me Ti 05 von Cognis eingesetzt, das wenigstens 65 Gew.-% Methyloleat enthält;
(b) 20 bis 25 Gew.-%, noch spezieller 22,5 Gew.-%, bezogen auf das Gesamtgewicht der Komponenten (a), (b), (c), (d) und (e); als anionisches Tensid wird dabei speziell Lutensit^{®} A-EP von BASF SE eingesetzt;
(c) 3 bis 7 Gew.-%, noch spezieller 5 Gew.-%, bezogen auf das Gesamtgewicht der Komponenten (a), (b), (c), (d) und (e); als aliphatische C₁₄-C₂₂-Carbonsäure wird dabei speziell Ölsäure eingesetzt;
(d) 0,005 bis 0,1 Gew.-%, noch spezieller 0,03 Gew.-%, bezogen auf das Gesamtgewicht der Komponenten (a), (b), (c), (d) und (e); als Entschäumer wird dabei speziell ein Siloxan-Entschäumer, wie Silikon^{®} SRE von Wacker eingesetzt;
(e) ad 100 Gew.-%, bezogen auf das Gesamtgewicht der Komponenten (a), (b), (c), (d) und (e); als Lösungsmittel wird dabei speziell Solvesso^{®} 150 ND von Exxon eingesetzt.

Die erfindungsgemäße Zusammensetzung verbessert die Wirkung von Herbiziden, wenn es mit diesen gemeinsam, d.h. in einem zeitlichen und lokalen Zusammenhang aufgebracht wird.

Ein weiterer Gegenstand der Erfindung ist daher die Verwendung der oben beschriebenen erfindungsgemäßen Zusammensetzung zur Verbesserung der Wirkung von Herbiziden. Bezüglich der Art, wie die erfindungsgemäße Zusammensetzung zur Anwendung kommt, und geeigneter und bevorzugter Herbizide wird auf die nachfolgenden Ausführungen zum herbiziden Mittel Bezug genommen.

Die Erfindung betrifft weiterhin ein herbizides Mittel, enthaltend
(A) eine die Wirkung von Herbiziden verbessernde Zusammensetzung (auch Booster-Zusammensetzung genannt) gemäß obiger Definition; und
(B) wenigstens ein Herbizid.

Bezüglich geeigneter und bevorzugter Ausgestaltungen der Booster-Zusammensetzung wird auf die vorstehenden Angaben hingewiesen.

Beim erfindungsgemäßen Mittel kann es sich um ein physikalisches Gemisch der Zusammensetzung A mit dem wenigstens einem Herbizid B handeln. Dementsprechend ist Gegenstand der Erfindung auch ein Gemisch, das die Zusammensetzung A und wenigstens ein Herbizid B enthält. Das Mittel kann aber auch jede beliebige Kombination der Zusammensetzung A mit wenigstens einem Herbizid B darstellen, wobei A und B nicht gemeinsam formuliert vorliegen müssen.

Ein Beispiel für ein erfindungsgemäßes Mittel, in welchem die Zusammensetzung A und das wenigstens eine Herbizid B nicht gemeinsam formuliert vorliegen, ist ein Zwei-Komponenten-Kit. Dementsprechend betrifft die vorliegende Erfindung auch ein Zwei-Komponenten-Kit, umfassend eine erste Komponente, welche die Zusammensetzung A enthält, und eine zweite Komponente, welche wenigstens ein Herbizid B, einen flüssigen oder festen Träger und gegebenenfalls wenigstens einen grenzflächenaktiven Stoff und/oder wenigstens ein übliches Hilfsmittel enthält. Geeignete flüssige und feste Träger, grenzflächenaktive Stoffe und übliche Hilfsmittel werden nachfolgend beschrieben.

Als Herbizide eignen sich grundsätzlich alle gängigen Herbizide. Hierzu gehören:
b1) aus der Gruppe der Lipid-Biosynthese-Inhibitoren:
   Hierbei handelt es sich um Verbindungen, welche die Lipid-Biosynthese hemmen.
   Diese Hemmung kann auf einer Inhibierung der Acetyl CoA Carboxylase (im Folgenden auch ACC Herbizide) oder auf einem anderen Mechanismus beruhen (im Folgenden auch als non-ACC Herbizide bezeichnet). Die ACC Herbizide gehören der Gruppe A der HRAC-Klassifizierung an, wohingegen die non-ACC Herbizide der Gruppe N der HRAC-Klassifizierung angehören. Beispiele sind:
   ACC-Herbizide wie Alloxydim, Alloxydim-natrium, Butroxydim, Clethodim, Clodinafop, Clodinafop-propargyl, Cycloxydim, Cyhalofop, Cyhalofop-butyl, Diclofop, Diclofopmethyl, Fenoxaprop, Fenoxaprop-ethyl, Fenoxaprop-P, Fenoxaprop-P-ethyl, Fluazifop, Fluazifop-butyl, Fluazifop-P, Fluazifop-P-butyl, Haloxyfop, Haloxyfop-methyl, Haloxyfop-P, Haloxyfop-P-methyl, Metamifop, Pinoxaden, Profoxydim, Propaquizafop, Quizalofop, Quizalofop-ethyl, Quizalofop-tefuryl, Quizalofop-P, Quizalofop-P-ethyl, Quizalofop-P-tefuryl, Sethoxydim, Tepraloxydim und Tralkoxydim, sowie Non-ACC-Herbizide wie Benfuresat, Butylat, Cycloat, Dalapon, Dimepiperat, EPTC, Esprocarb, Ethofumesat, Flupropanat, Molinat, Orbencarb, Pebulat, Prosulfocarb, TCA, Thiobencarb, Tiocarbazil, Triallat und Vernolat;
b2) aus der Gruppe der ALS-Inhibitoren:
   Hierbei handelt es sich um Verbindungen, deren herbizde Wirkung auf der Inhibierung der Acetolactat-Synthase und damit auf der Inhibierung der Biosynthese verzweigtkettiger Aminosäuren beruht. Derartige Inhibitoren gehören zur Gruppe B der HRAC-Klassifizierung. Beispiele sind:
   Sulfonylharnstoffe wie Amidosulfuron, Azimsulfuron, Bensulfuron, Bensulfuron-methyl, Chlorimuron, Chlorimuron-ethyl, Chlorsulfuron, Cinosulfuron, Cyclosulfamuron, Ethametsulfuron, Ethametsulfuron-methyl, Ethoxysulfuron, Flazasulfuron, Flucetosulfuron, Flupyrsulfuron, Flupyrsulfuron-methyl- natrium, Foramsulfuron, Halosulfuron, Halosulfuron-methyl, Imazosulfuron, lodosulfuron, lodosulfuron-methylnatrium, Mesosulfuron, Metsulfuron, Metsulfuron-methyl, Nicosulfuron, Orthosulfamuron, Oxasulfuron, Primisulfuron, Primisulfuron-methyl, Prosulfuron, Pyrazosulfuron, Pyrazosulfuron-ethyl, Rimsulfuron, Sulfometuron, Sulfometuronmethyl, Sulfosulfuron, Thifensulfuron, Thifensulfuron-methyl, Triasulfuron, Tribenuron, Tribenuron-methyl, Trifloxysulfuron, Triflusulfuron, Triflusulfuron-methyl und Tritosulfuron,
   Imidazolinone wie Imazamethabenz, Imazamethabenz-methyl, Imazamox, Imazapic, Imazapyr, Imazaquin und Imazethapyr,
   Triazolopyrimidin-Herbizide und Sulfonanilide wie Cloransulam, Cloransulam-methyl, Diclosulam, Flumetsulam, Florasulam, Metosulam, Penoxsulam, Pyrimisulfan und Pyroxsulam,
   Pyrimdinylbenzoate wie Bispyribac, Bispyribac-natrium, Pyribenzoxim, Pyriftalid, Pyriminobac, Pyriminobac-methyl, Pyrithiobac, Pyrithiobac- natrium, sowie Sulfonylaminocarbonyltriazolinon Herbizide wie Flucarbazon, Flucarbazon- natrium, Propoxycarbazon, Propoxycarbazon- natrium, Thiencarbazon und Thiencarbazonmethyl. Hierunter stellen Zusammensetzungen, die wenigstens ein Imidazolinon-Herbizid enthalten, eine bevorzuge Ausführungsform der Erfindung dar;
b3) aus der Gruppe der Photosynthese-Inhibitoren:
   Hierbei handelt es sich um Verbindungen, deren herbizde Wirkung auf der Inhibierung des Photosystems II in Pflanzen (sog. PSII-Inhibitoren, Gruppen C1, C2 und C3 der HRAC-Klassifizierung) oder auf der Behinderung des Elektronentransfer im Photosystem I der Pflanzen (sog. PSI-Inhibitoren, Gruppe D der HRAC-Klassifizierung) und somit auf einer Inhibierung oder Störung der Photosynthese beruhen. Hierunter sind PSII-Inhibitoren bevorzugt. Beispiele sind:
   Amicarbazon, Inhibitoren des Photosystems II, z.B. Triazin-Herbizide, einschließlich Chlorotriazine, Triazinone, Triazindione, Methylthiotriazine und Pyridazinone wie Ametryn, Atrazin, Chloridazon, Cyanazin, Desmetryn, Dimethametryn, Hexazinon, Metribuzin, Prometon, Prometryn, Propazin, Simazin, Simetryn, Terbumeton, Terbuthylazin, Terbutryn und Trietazin,
   Arylharnstoffe wie Chlorobromuron, Chlorotoluron, Chloroxuron, Dimefuron, Diuron, Fluometuron, Isoproturon, Isouron, Linuron, Metamitron, Methabenzthiazuron, Metobenzuron, Metoxuron, Monolinuron, Neburon, Siduron, Tebuthiuron und Thidiazuron,
   Phenylcarbamate wie Desmedipham, Karbutilat, Phenmedipham, Phenmediphamethyl,
   Nitrilherbizide wie Bromofenoxim, Bromoxynil und seine Salze und Ester, loxynil und seine Salze und Ester,
   Uracile wie Bromacil, Lenacil und Terbacil,
   sowie Bentazon und Bentazon-natrium, Pyridatre, Pyridafol, Pentanochlor und Propanil und Inhibitoren des Photosystems I wie Diquat, Diquat-dibromid, Paraquat, Paraquatdichlorid und Paraquat-dimetilsulfat. Hierunter stellen Zusammensetzungen, die wenigstens ein Arylharnstoff-Herbizid enthalten, eine bevorzuge Ausführungsform der Erfindung dar. Hierunter stellen auch Zusammensetzungen, die wenigstens ein Triazin-Herbizid enthalten, eine bevorzugte Ausführungsform der Erfindung dar. Hierunter stellen weiterhin Zusammensetzungen, die wenigstens ein Nitrilherbizid enthalten, eine bevorzuge Ausführungsform der Erfindung dar;
b4) aus der Gruppe der Protoporphyrinogen-IX-Oxidase-Inhibitoren:
   Hierbei handelt es sich um Verbindungen, deren herbizde Wirkung auf der Inhibierung der Protoporphyrinogen-IX-oxidase beruht. Derartige Inhibitoren gehören zur Gruppe E der HRAC-Klassifizierung. Beispiele sind: Acifluorfen, Acifluorfen-natrium, Azafenidin, Bencarbazon, Benzfendizon, Bifenox, Butafenacil, Carfentrazon, Carfentrazon-ethyl, Chlomethoxyfen, Cinidon-ethyl, Fluazolat, Flufenpyr, Flufenpyr-ethyl, Flumiclorac, Flumiclorac-pentyl, Flumioxazin, Fluoroglycofen, Fluoroglycofen-ethyl, Fluthiacet, Fluthiacet-methyl, Fomesafen, Halosafen, Lactofen, Oxadiargyl, Oxadiazon, Oxyfluorfen, Pentoxazon, Profluazol, Pyraclonil, Pyraflufen, Pyraflufen-ethyl, Sulfentrazon, Thidiazimin, 2-Chlor-5-[3,6-dihydro-3-methyl-2,6-dioxo-4-(trifluormethyl)-1(2H)-pyrimidinyl]-4-fluor-N-[(isopropyl)methylsulfamoyl]benzamid (CAS 372137-35-4), [3-[2-Chlor-4-fluor-5-(1-methyl-6-trifluormethyl-2,4-dioxo-1,2,3,4-tetrahydropyrimidin-3-yl)phenoxy]-2-pyridyloxy]essigsäureethylester (CAS 353292-31-6), N-Ethyl-3-(2,6-dichlor-4-trifluormethylphenoxy)-5-methyl-1*H*-pyrazol-1-carboxamid (CAS 452098-92-9), N-Tetrahydrofurfuryl-3-(2,6-dichlor-4-trifluormethylphenoxy)-5-methyl-1*H*-pyrazol-1-carboxamid (CAS 915396-43-9), N-Ethyl-3-(2-chlor-6-fluor-4-trifluormethylphenoxy)-5-methyl-1*H*-pyrazol-1-carboxamid (CAS 452099-05-7) und N-Tetrahydrofurfuryl-3-(2-chlor-6-fluor-4-trifluormethylphenoxy)-5-methyl-1*H*-pyrazol-1-carboxamid (CAS 45100-03-7);
b5) aus der Gruppe der Bleacher-Herbizide (auch als Herbizide mit Bleaching-Eigenschaften bezeichnet):
   Hierbei handelt es sich um Verbindungen, deren herbizde Wirkung auf der Inhibierung oder Störung der Carotinoid-Biosynthese beruht. Hierzu zählen Verbindungen, welche die Carotinoid-Biosynthese durch Inhibierung der Phytoendesaturase verhindern (sog. PDS-Inhibitoren, Klasse F1 der HRAC-Klassifizierung), Verbindungen, welche die 4-Hydroxyphenylpyruvat-Dioxygenase inhibieren (HPPD-Inhibitoren, Klasse F2 der HRAC-Klassifizierung), sowie Verbindungen, welche die Carotinoid-Biosynthese auf bislang nicht geklärte Weise inhibieren (Bleacher - unbekanntes Target, Klasse F3 der HRAC-Klassifizierung). Beispiele sind:
   PDS-Inhibitoren: Beflubutamid, Diflufenican, Fluridon, Flurochloridon, Flurtamon, Norflurazon, Picolinafen und 4-(3-Trifluormethylphenoxy)-2-(4-trifluormethylphenyl)pyrimidin (CAS 180608-33-7),
   HPPD-Inhibitoren: Benzobicyclon, Benzofenap, Isoxaflutol, Mesotrion, Pyrasulfotol, Pyrazolynat, Pyrazoxyfen, Sulcotrion, Tefuryltrion, Tembotrion, Topramezon, 4-Hydroxy-3-[[2-[(2-methoxyethoxy)methyl]-6-(trifluormethyl)-3-pyridyl]carbonyl]-bicyclo[3.2.1]oct-3-en-2-on (CAS 352010-68-5) und die weiter unten beschriebenen Verbindungen I, die von den zuvor genannten verschieden sind, Bleacher, unbekanntes Target: Aclonifen, Amitrol und Clomazone;
b6) aus der Gruppe der EPSP-Synthase-Inhibitoren:
   Hierbei handelt es sich um Verbindungen, deren herbizde Wirkung auf der Inhibierung der Enolpyruvyl-Shikimat-3-Phosphat-Synthase und damit auf der Inhibierung der Biosynthese von Aminosäuren in Pflanzen beruht. Derartige Inhibitoren gehören zur Gruppe G der HRAC-Klassifizierung. Beispiele sind:
   Glyphosat, Glyphosat-isopropylammonium und Glyphosat-trimesium (Sulfosat);
b7) aus der Gruppe der Glutamin-Synthase-Inhibitoren:
   Hierbei handelt es sich um Verbindungen, deren herbizde Wirkung auf der Inhibierung der Glutamin-Synthetase und damit ebenfalls auf der Inhibierung der Biosynthese von Aminosäuren in Pflanzen beruht. Derartige Inhibitoren gehören zur Gruppe H der HRAC-Klassifizierung. Beispiele sind:
   Bilanaphos (Bialaphos), Bilanaphos-natrium, Glufosinat und Glufosinat-ammonium;
b8) aus der Gruppe der DHP-Synthase-Inhibitoren:
   Hierbei handelt es sich um Verbindungen, deren herbizde Wirkung auf auf der Inhibierung der 7,8-Dihydropteroatsynthase beruht. Derartige Inhibitoren gehören zur Gruppe I der HRAC-Klassifizierung. Ein Beispiel ist: Asulam;
b9) aus der Gruppe der Mitose-Inhibitoren:
   Hierbei handelt es sich um Verbindungen, deren herbizde Wirkung auf der Störung oder Inhibierung der Herstellung oder Organisation der Microtubuli beruht und damit die Mitose hemmt. Derartige Inhibitoren gehöhren zu den Gruppen K1 und K2 der HRAC-Klassifizierung. Hierunter sind Verbindungen der Gruppe K1, insbesondere Dinitroaniline bevorzugt. Beispiele sind:
   Verbindungen der Gruppe K1: Dinitroaniline wie Benfluralin, Butralin, Dinitramin, Ethalfluralin, Fluchloralin, Oryzalin, Pendimethalin, Prodiamin und Trifluralin,
   Phosphoramidate wie Amiprophos, Amiprophos-methyl und Butamiphos,
   Benzoesäuren wie Chlorthal, Chlorthal-dimethyl, Pyridine wie Dithiopyr und Thiazopyr,
   Benzamide wie Propyzamid und Tebutam,
   Verbindungen der Gruppe K2: Chlorpropham, Propham und Carbethamid.
   Hierunter sind Verbindungen der Gruppe K1 und insbesondere Dinitroaniline bevorzugt;
b10) aus der Gruppe der VLCFA-Inhibitoren:
   Hierbei handelt es sich um Verbindungen, deren herbizde Wirkung auf der Inhibierung der Synthese langkettiger Fettsäuren und damit auf eine Störung oder Inhibierung der Zellteilung in Pflanzen beruht. Derartige Inhibitoren gehöhren zu der Gruppe K3 der HRAC-Klassifizierung. Beispiele sind:
   Chloroacetamide wie Acetochlor, Alachlor, Butachlor, Dimethachlor, Dimethanamid, Dimethenamid-P, Metazachlor, Metolachlor, Metolachlor-S, Pethoxamid, Pretilachlor, Propachlor, Propisochlor, und Thenylchlor Oxyacetanilide wie Flufenacet und Mefenacet,
   Acetanilide wie Diphenamid, Naproanilid und Napropamid,
   Tetrazolinone wie Fentrazamid, und
   sonstige wie Anilofos, Cafenstrol, Piperophos, Pyroxasulfon sowie von Pyroxasulfon verschiedene Isoxazolin-Verbindungen der Formel II, 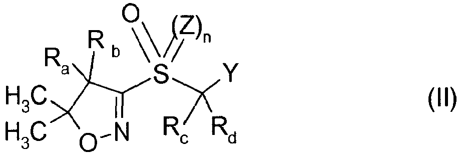
      worin Rₐ, R_{b}, R_{c}, R_{d}, Z, Y und n die folgenden Bedeutungen aufweisen:
      Rₐ, R_{b}, R_{c}, R_{d} jeweils unabhängig voneinander Wasserstoff, Halogen oder C₁-C₄-Alkyl;

      - Y: Phenyl oder monocyclisches 5-, 6-, 7-, 8-, 9- oder 10-gliedriges Heterocyclyl, enthaltend neben Kohlenstoffringgliedern ein, zwei oder drei gleiche oder verschiedene Heteroatome, ausgewählt aus der Gruppe Sauerstoff, Schwefel oder Stickstoff als Ringglieder, wobei Phenyl und Heterocyclyl unsubstituiert sind oder 1, 2 oder 3 Substituenten R^{yy} tragen, die ausgewählt sind unter Halogen, C₁-C₄-Alkyl, C₁-C₄-Alkoxy, C₁-C₄-Halogenalkyl und C₁-C₄-Halogenalkoxy, vorzugsweise Phenyl oder 5- oder 6-gliedriges aromatisches Heterocyclyl (Hetaryl), das neben Kohlenstoffringgliedern ein, zwei oder drei Stickstoffatome als Ringglieder enthält, wobei Phenyl und Hetaryl unsubstituiert sind oder 1, 2 oder 3 Substituenten R^{yy} tragen,
      - Z: Sauerstoff oder NH; und
      - n: null oder eins.

Unter den Isoxazolin-Verbindungen der Formel II sind die Isoxazolin-Verbindungen der Formel II bevorzugt, worin
Rₐ, R_{b}, R_{c}, R_{d} jeweils unabhängig voneinander für H, F, Cl oder Methyl stehen;
- Z: für Sauerstoff steht;
- n: für 0 oder 1 steht; und
- Y: für Phenyl, Pyrazolyl oder 1,2,3-Triazolyl steht, wobei die drei letztgenannten Reste unsubstituiert sind oder ein, zwei oder drei Substituenten R^{yy} tragen, speziell einer der folgenden Reste: 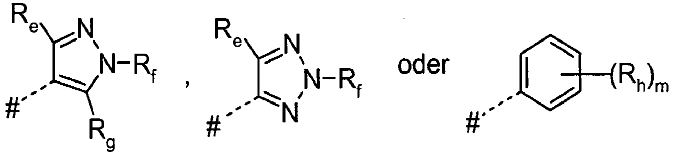 worin
Rₑ für Halogen, C₁-C₄-Alkyl oder C₁-C₄-Halogenalkyl steht;
R_{f} für C₁-C₄-Alkyl steht;
R_{g} für Halogen, C₁-C₄-Alkoxy oder C₁-C₄-Halogenalkoxy steht;
Rₕ für Halogen, C₁-C₄-Alkyl, C₁-C₄-Halogenalkyl oder C₁-C₄-Halogenalkoxy steht;
m für 0, 1, 2 oder 3 steht; und
# die Verknüpfungsstelle an die Gruppe CR_{c}R_{d} kennzeichnet.

Hierunter sind Isoxazolin-Verbindungen der Formel II ganz besonders bevorzugt, worin
- Rₐ: für Wasserstoff steht;
- R_{b}: für Fluor steht;
- R_{c}: für Wasserstoff oder Fluor steht;
- R_{d}: für Wasserstoff oder Fluor steht;
- Z: für Sauerstoff steht;
- n: für null oder 1, insbesondere 1, steht; und
- Y: für einen der Reste der Formeln Y₁, Y₂, Y₃ oder Y₄ steht, 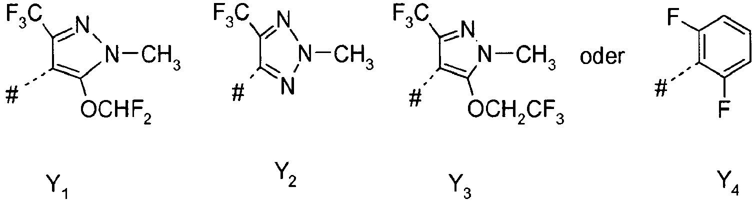
worin # die Verknüpfungsstelle an die Gruppe CR_{c}R_{d} kennzeichnet.

Hierunter sind insbesondere die Isoxazolin-Verbindungen der Formeln II.1, II.2, II.3, II.4, II.5, II.6, II.7, II.8 und II.9 bevorzugt.

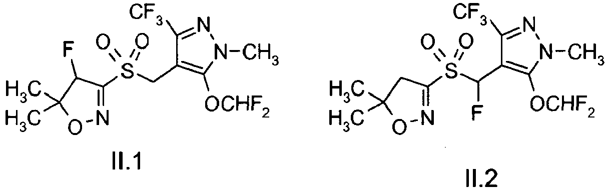

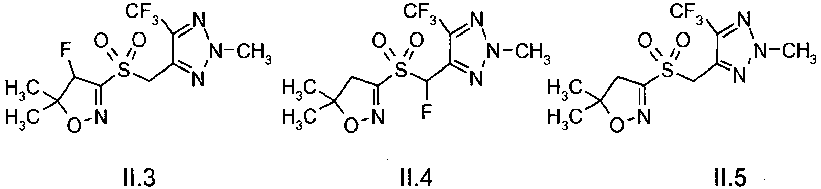

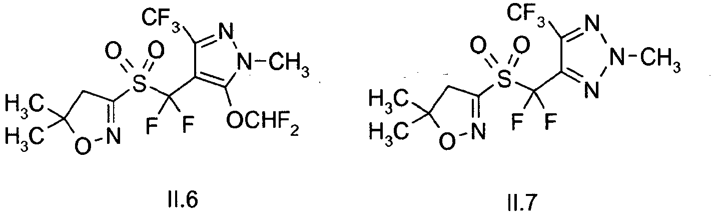

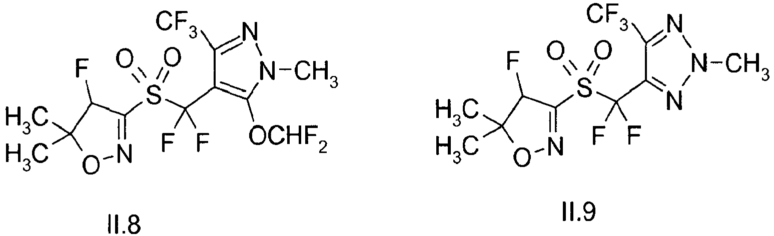

Die Isoxazolin-Verbindungen der Formel II sind literaturbekannt, z. B. aus WO 2006/024820, WO 2006/037945, WO 2007/071900 und WO 2007/096576.

Unter den VLCFA-Inhibitoren sind Chloroacetamide, Oxyacetamide und Pyroxasulfon bevorzugt;
b11) aus der Gruppe der Cellulose-Biosynthese-Inhibitoren:
   Hierbei handelt es sich um Verbindungen, deren herbizde Wirkung auf der Inhibierung der Biosynthese von Cellulose und damit der Bildung der Zellwände in Pflanzen beruht.
   Derartige Inhibitoren gehöhren zu der Gruppe L der HRAC-Klassifizierung. Beispiele sind:
      Chlorthiamid, Dichlobenil, Flupoxam und Isoxaben;
b12) aus der Gruppe der Entkoppler-Herbizide:
   Hierbei handelt es sich um Verbindungen, deren herbizde Wirkung auf der Zerstörung der Zellmembran beruht. Derartige Inhibitoren gehöhren zu der Gruppe M der HRAC-Klassifizierung. Beispiele sind:
   Dinoseb, Dinoterb und DNOC und seine Salze;
b13) aus der Gruppe der Auxin-Herbizide:
   Hierbei handelt es sich um Verbindungen, die wie Auxine, also Phytohormone in Pflanzen, wirken und das Wachstum der Pflanzen hemmen. Derartige Stoffe gehöhren zu der Gruppe O der HRAC-Klassifizierung. Beispiele sind:
   2,4-D und seine Salze und Ester, 2,4-DB und seine Salze und Ester, Aminopyralid und seine Salze wie Aminopyralid-tris(2-hydroxypropyl)ammonium und seine Ester, Benazolin, Benazolin-ethyl, Chloramben und seine Salze und Ester, Clomeprop, Clopyralid und seine Salze und Ester, Dicamba und seine Salze und Ester, Dichlorprop und seine Salze und Ester, Dichlorprop-P und seine Salze und Ester, Fluroxypyr, Fluroxypyrbutometyl, Fluroxypyr-meptyl, MCPA und seine Salze und Ester, MCPAthioethyl, MCPB und seine Salze und Ester, Mecoprop und seine Salze und Ester, Mecoprop-P und seine Salze und Ester, Picloram und seine Salze und Ester, Quinclorac, Quinmerac, TBA (2,3,6) und seine Salze und Ester, Triclopyr und seine Salze und Ester, und 5,6-Dichlor-2-cyclopropyl-4-pyrimidincarbonsäure (CAS 858956-08-8) und seine Salze und Ester;
b14) aus der Gruppe der Auxin-Transport-Inhibitoren:
   Hierbei handelt es sich um Verbindungen, deren herbizide Wirkung auf der Hemmung des Auxintransports in Pflanzen beruht. Derartige Stoffe gehöhren zu der Gruppe P der HRAC-Klassifizierung. Beispiele sind:
   Diflufenzopyr, Diflufenzopyr-natrium, Naptalam und Naptalam-natrium;
b15) aus der Gruppe der sonstigen Herbizide:
   Bromobutid, Chlorflurenol, Chlorflurenol-methyl, Cinmethylin, Cumyluron, Dalapon, Dazomet, Difenzoquat, Difenzoquat-metilsulfate, Dimethipin, DSMA, Dymron, Endothal und seine Salze, Etobenzanid, Flamprop, Flamprop-isopropyl, Flamprop-methyl, Flamprop-M-isopropyl, Flamprop-M-methyl, Flurenol, Flurenol-butyl, Flurprimidol, Fosamin, Fosamine-ammonium, Indanofan, Maleinsäure-hydrazid, Mefluidid, Metam, Methylazid, Methylbromid, Methyl-dymron, Methyljodid, MSMA, Ölsäure, Oxaziclomefon, Pelargonsäure, Pyributicarb, Quinoclamin, Triaziflam, Tridiphan und 6-Chlor-3-(2-cyclopropyl-6-methylphenoxy)-4-pyridazinol (CAS 499223-49-3) und seine Salze und Ester.

Die Herbizide B der Gruppen b1) bis b15) sind bekannte Herbizide, siehe z. B. The Compendium of Pesticide Common Names (http://www.alanwood.net/pesticides/); Farm Chemicals Handbook 2000 Band 86, Meister Publishing Company, 2000; B. Hock, C. Fedtke, R. R. Schmidt, Herbizide, Georg Thieme Verlag, Stuttgart 1995; W. H. Ahrens, Herbicide Handbook, 7. Auflage, Weed Science Society of America, 1994; und K. K. Hatzios, Herbicide Handbook, Supplement zur 7. Auflage, Weed Science Society of America, 1998. 2,2,5-Trimethyl-3-(dichloracetyl)-1,3-oxazolidin [CAS-Nr. 52836-31-4] wird auch als R-29148 bezeichnet. 4-(Dichloracetyl)-1-oxa-4-azaspiro[4.5]decan [CAS Nr. 71526-07-3] wird auch als AD-67 und MON 4660 bezeichnet. Weitere herbizide Wirkstoffe sind aus WO 96/26202, WO 97/41116, WO 97/41117, WO 97/41118 und WO 01/83459 sowie aus W. Krämer et al. (ed.) "Modern Crop Protection Compounds", Vol. 1, Wiley VCH, 2007 und der darin zitierten Literatur bekannt.

Die Zuordnung der Wirkstoffe zu den jeweiligen Wirkmechanismen basiert auf dem momentanen Kenntnisstand. Falls für einen Wirkstoff mehrere Wirkmechanismen zum Tragen kommen, so wurde dieser Stoff nur einem Wirkungsmechanismus zugeordnet.

Sofern die Herbizide B geometrische Isomere, z. B. E/Z-Isomere zu bilden vermögen, können sowohl die reinen Isomere als auch deren Gemische in den erfindungsgemäßen Zusammensetzungen eingesetzt werden. Sofern die Herbizide B ein oder mehrere Chiralitätszentren aufweisen und somit als Enantiomere oder Diastereomere vorliegen, können sowohl die reinen Enantiomeren und Diastereomeren als auch deren Gemische in den erfindungsgemäßen Zusammensetzungen eingesetzt werden.

Soweit die Herbizide B ionisierbare funktionelle Gruppen aufweisen, können sie auch in Form ihrer landwirtschaftlich verträglichen Salze eingesetzt werden. Im Allgemeinen kommen die Salze derjenigen Kationen oder die Säureadditionssalze derjenigen Säuren in Betracht, deren Kationen, beziehungsweise Anionen, die Wirkung der Wirkstoffe nicht negativ beeinträchtigen. Geeignete Salze sind unten zur Verbindung I beschrieben.

Solche Wirkstoffe B, die eine Carboxylgruppe aufweisen, können in Form der Säure, in Form eines landwirtschaftlich geeigneten Salzes, aber auch in Form eines landwirtschaftlich verträglichen Derivates in den erfindungsgemäßen Zusammensetzungen eingesetzt werden, z.B. als Amide wie Mono- und Di-C₁-C₆-alkylamide oder Arylamide, als Ester, z.B. als Allylester, Propargylester, C₁-C₁₀-Alkylester, Alkoxyalkylester sowie als Thioester, z.B. als C₁-C₁₀-Alkylthioester eingesetzt werden. Bevorzugte Mono- und Di-C₁-C₆-alkylamide sind die Methyl- und die Dimethylamide. Bevorzugte Arylamide sind beispielsweise die Anilide und die 2-Chloranilide. Bevorzugte Alkylester sind beispielsweise die Methyl-, Ethyl-, Propyl-, Isopropyl-, Butyl-, Isobutyl-, Pentyl-, Mexyl- (1-Methylhexyl-) oder Isooctyl- (2-Ethylhexyl-)ester. Bevorzugte C₁-C₄-Alkoxy-C₁-C₄-alkylester sind die geradkettigen oder verzweigten C₁-C₄-Alkoxyethylester, beispielsweise der Methoxyethyl-, Ethoxyethyl- oder Butoxyethylester. Beispiel für die geradkettigen oder verzweigten C₁-C₁₀-Alkylthioester ist der Ethylthioester.

Bevorzugt ist das wenigstens eine Herbizid ausgewählt unter Herbiziden mit Bleaching-Eigenschaften und besonders bevorzugt unter Hydroxyphenylpyruvatdioxygenase-Inhibitoren (HPPD-Inhibitoren). Besonders bevorzugt ist das wenigstens eine Herbizid ausgewählt ist unter HPPD-Inhibitoren vom Heterocyclus-Typ.

Die HPPD-Inhibitoren vom Heterocyclus-Typ sind dabei vorzugsweise ausgewählt unter Verbindungen der Formel I
worin 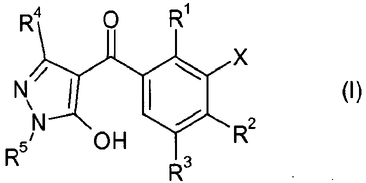
- R¹ und R²: unabhängig voneinander für Wasserstoff, Halogen, C₁-C₆-Alkyl, C₁-C₆-Haloalkyl, C₁-C₆-Alkoxy, C₁-C₆-Haloalkoxy, C₁-C₆-Alkylthio, C₁-C₆-Haloalkylthio, C₁-C₆-Alkylsulfinyl, C₁-C₆-Haloalkylsulfinyl, C₁-C₆-Alkylsulfonyl oder C₁-C₆-Haloalkylsulfonyl stehen;
- R³: für Wasserstoff, Halogen oder C₁-C₆-Alkyl steht;
- R⁴: für Wasserstoff oder C₁-C₆-Alkyl steht;
- R⁵: für C₁-C₆-Alkyl steht; und
- X: für einen 5-gliedrigen gesättigten, teilweise ungesättigten oder aromatischen Heterocyclus mit 1, 2 oder 3 Heteroatomen als Ringgliedern, die ausgewählt sind unter O, S und N, steht, wobei der Heterocyclus 1, 2, 3 oder 4 Substituenten tragen kann, die ausgewählt sind unter Halogen, C₁-C₆-Alkyl, C₁-C₆-Haloalkyl, C₁-C₆-Alkoxy, C₁-C₆-Haloalkoxy, C₁-C₆-Alkylthio und C₁-C₆-Haloalkylthio;
und die landwirtschaftlich verträglichen Salze davon.

Die Verbindungen I und Verfahren zu ihrer Herstellung sind beispielsweise aus der WO 00/53014 und der darin zitierten Literatur bekannt.

Als landwirtschaftlich verträgliche Salze kommen vor allem die Salze derjenigen Kationen oder die Säureadditionssalze derjenigen Säuren in Betracht, deren Kationen beziehungsweise Anionen die fungizide Wirkung der Verbindungen I nicht negativ beeinträchtigen. So kommen als Kationen insbesondere die Ionen der Alkalimetalle, vorzugsweise Natrium und Kalium, der Erdalkalimetalle, vorzugsweise Calcium, Magnesium und Barium, und der Übergangsmetalle, vorzugsweise Mangan, Kupfer, Zink und Eisen, sowie das Ammoniumion, das gewünschtenfalls ein bis vier C₁-C₄-Alkylsubstituenten und/oder einen Phenyl- oder Benzylsubstituenten tragen kann, vorzugsweise Diisopropylammonium, Tetramethylammonium, Tetrabutylammonium, Trimethylbenzylammonium, des weiteren Phosphoniumionen, Sulfoniumionen, vorzugsweise Tri(C₁-C₄-alkyl)sulfonium und Sulfoxoniumionen, vorzugsweise Tri(C₁-C₄-alkyl)sulfoxonium, in Betracht.

Anionen von brauchbaren Säureadditionssalzen sind in erster Linie Chlorid, Bromid, Fluorid, Hydrogensulfat, Sulfat, Dihydrogenphosphat, Hydrogenphosphat, Phosphat, Nitrat, Hydrogencarbonat, Carbonat, Hexafluorosilikat, Hexafluorophosphat, Benzoat, sowie die Anionen von C₁-C₄-Alkansäuren, vorzugsweise Formiat, Acetat, Propionat und Butyrat. Sie können durch Reaktion von I mit einer Säure des entsprechenden Anions, vorzugsweise der Chlorwasserstoffsäure, Bromwasserstoffsäure, Schwefelsäure, Phosphorsäure oder Salpetersäure, gebildet werden.

Vorzugsweise stehen R¹ und R² in Verbindungen der Formel I unabhängig voneinander für Halogen, C₁-C₆-Alkyl, C₁-C₆-Alkylthio, C₁-C₆-Alkylsulfinyl oder C₁-C₆-Alkylsulfonyl, besonders bevorzugt für Chlor, Methyl, Ethyl, Methylthio, Methylsulfinyl oder Methylsulfonyl. R¹ steht besonders bevorzugt für Halogen oder C₁-C₆-Alkyl, stärker bevorzugt für Halogen oder C₁-C₄-Alkyl, insbesondere für Chlor, Methyl oder Ethyl und speziell für Chlor oder Methyl. R² steht besonders bevorzugt für C₁-C₆-Alkylthio, C₁-C₆-Alkylsulfinyl oder C₁-C₆-Alkylsulfonyl, besonders bevorzugt für Methylthio, Methylsulfinyl oder Methylsulfonyl und speziell für Methylsulfonyl.

R³ steht vorzugsweise für Wasserstoff oder Methyl und insbesondere für Wasserstoff.

R⁴ steht vorzugsweise für Wasserstoff, Methyl oder Trifluormethyl und insbesondere für Wasserstoff.

R⁵ steht vorzugsweise für C₁-C₄-Alkyl, besonders bevorzugt für Methyl, Ethyl, Isopropyl oder Isobutyl und speziell für Methyl.

X ist vorzugsweise ausgewählt unter Isoxazolyl, 4,5-Dihydroisoxazolyl und Thiazolyl, die 1, 2 oder 3 Substituenten tragen können, die ausgewählt sind unter Halogen, C₁-C₆-Alkyl, C₁-C₆-Haloalkyl, C₁-C₆-Alkoxy, C₁-C₆-Haloalkoxy, C₁-C₆-Alkylthio und C₁-C₆-Haloalkylthio. Besonders bevorzugt ist X ausgewählt unter Isoxazolyl und 4,5-Dihydroisoxazolyl, die durch 1 oder 2 C₁-C₆-Alkylgruppen substituiert sein können. Insbesondere steht X für 4,5-Dihydroisoxazolyl, das durch 1 oder 2 C₁-C₆-Alkylgruppen substituiert sein kann, und speziell für nicht substituiertes 4,5-Dihydroisoxazolyl.

Bevorzugte Verbindungen I sind in der folgenden Tabelle aufgeführt:

| Nr. | R¹ | R² | R³ | R⁴ | R⁵ | X |
|---|---|---|---|---|---|---|
| 1. | Cl | SO₂CH₃ | H | CH₃ | CH₃ | 2-Thiazolyl |
| 2. | Cl | SO₂CH₃ | H | H | CH₃ | 2-Thiazolyl |
| 3. | Cl | SO₂CH₃ | H | CH₃ | CH₃ | 4,5-Dihydro-isoxazol-3-yl |
| 4. | Cl | Cl | H | CH₃ | CH₃ | 4,5-Dihydro-isoxazol-3-yl |
| 5. | Cl | SO₂CH₃ | H | H | CH₃ | 4,5-Dihydro-isoxazol-3-yl |
| 6. | Cl | SO₂CH₃ | H | H | CH₃ | 4,5-Dihydro-5-methyl-isoxazol-3-yl |
| 7. | Cl | SO₂CH₃ | H | H | CH₃ | 4,5-Dihydro-5,5-dimethyl-isoxazol-3-yl |
| 8. | Cl | SO₂CH₃ | H | H | CH₃ | 4,5-Dihydro-5-ethyl-isoxazol-3-yl |
| 9. | Cl | SO₂CH₃ | H | H | CH₃ | 4,5-Dihydro-5,5-diethyl-isoxazol-3-yl |
| 10. | Cl | SO₂CH₃ | H | H | CH₃ | 4,5-Dihydro-5-chlormethyl-isoxazol-3-yl |
| 11. | Cl | SCH₃ | H | H | CH₃ | 4,5-Dihydro-isoxazol-3-yl |
| 12. | Cl | SO₂CH₃ | H | H | CH₃ | 4,5-Dihydro-5-ethoxy-isoxazol-3-yl |
| 13. | Cl | SO₂CH₃ | H | H | CH₃ | 4,5-Dihydro-5-methoxy-isoxazol-3-yl |
| 14. | CH₃ | SO₂CH₃ | H | H | CH₃ | 4,5-Dihydro-isoxazol-3-yl |
| 15. | Cl | SO₂CH₃ | H | H | CH₃ | 4,5-Dihydro-4,5-dimethyl-isoxazol-3-yl |
| 16. | Cl | SO₂CH₃ | H | H | CH₃ | 4,5-Dihydro-5-ethylthio-isoxazol-3-yl |
| 17. | Cl | SO₂CH₃ | H | H | CH₃ | 4,5-Dihydro-5-trifluormethyl-isoxazol-3-yl |
| 18. | SCH₃ | SCH₃ | H | H | CH₃ | 4,5-Dihydro-isoxazol-3-yl |
| 19. | Cl | SO₂CH₃ | H | H | C₂H₅ | 2-Thiazolyl |
| 20. | Cl | SO₂CH₃ | H | H | C₂H₅ | 4,5-Dihydro-isoxazol-3-yl |
| 21. | Cl | SO₂CH₃ | H | H | C₂H₅ | 4,5-Dihydro-5-methyl-isoxazol-3-yl |
| 22. | Cl | SO₂CH₃ | H | H | C₂H₅ | 4,5-Dihydro-5,5-dimethyl-isoxazol-3-yl |
| 23. | Cl | SO₂CH₃ | H | H | C₂H₅ | 4,5-Dihydro-5-ethyl-isoxazol-3-yl |
| 24. | Cl | SO₂CH₃ | H | H | C₂H₅ | 4,5-Dihydro-5,5-diethyl-isoxazol-3-yl |
| 25. | Cl | SCH₃ | H | H | C₂H₅ | 4,5-Dihydro-isoxazol-3-yl |
| 26. | Cl | SO₂CH₃ | H | H | C₂H₅ | 4,5-Dihydro-5-chlormethyl-isoxazol-3-yl |
| 27. | Cl | SO₂CH₃ | H | H | C₂H₅ | 4,5-Dihydro-5-ethoxy-isoxazol-3-yl |
| 28. | Cl | SO₂CH₃ | H | H | C₂H₅ | 4,5-Dihydro-4,5-dimethyl-isoxazol-3-yl |
| 29. | CH₃ | SO₂CH₃ | H | H | C₂H₅ | 4,5-Dihydro-isoxazol-3-yl |
| 30. | Cl | SO₂CH₃ | H | H | C₂H₅ | 4,5-Dihydro-5-ethylthio-isoxazol-3-yl |
| 31. | Cl | SO₂CH₃ | H | H | C₂H₅ | 4,5-Dihydro-5-trifluormethyl-isoxazol-3-yl |
| 32. | SCH₃ | SCH₃ | H | H | C₂H₅ | 4,5-Dihydro-isoxazol-3-yl |
| 33. | Cl | SO₂CH₃ | H | H | i-C₄H₉ | 4,5-Dihydro-isoxazol-3-yl |
| 34. | Cl | SO₂CH₃ | H | H | CH₃ | 3-Methyl-isoxazol-5-yl |
| 35. | Cl | SO₂CH₃ | H | H | C₂H₅ | 3-Methyl-isoxazol-5-yl |
| 36. | CH₃ | SO₂CH₃ | H | H | C₂H₅ | 3-Methyl-isoxazol-5-yl |
| 37. | CH₃ | SO₂CH₃ | H | CH₃ | CH₃ | 4,5-Dihydro-isoxazol-3-yl |
| 38. | CH₃ | Cl | H | CH₃ | CH₃ | 4,5-Dihydro-isoxazol-3-yl |
| 39. | CH₃ | SO₂CH₃ | H | H | CH₃ | 4,5-Dihydro-5-methyl- isoxazol-3-yl |
| 40. | CH₃ | SO₂CH₃ | H | H | CH₃ | 4,5-Dihydro-5,5-dimethyl-isoxazol-3-yl |
| 41. | CH₃ | SO₂CH₃ | H | H | CH₃ | 4,5-Dihydro-5-ethyl-isoxazol-3-yl |
| 42. | CH₃ | SO₂CH₃ | H | H | CH₃ | 4,5-Dihydro-5,5-diethyl-isoxazol-3-yl |
| 43. | CH₃ | SO₂CH₃ | H | H | CH₃ | 4,5-Dihydro-isoxazol-3-yl |
| 44. | CH₃ | SO₂CH₃ | H | H | CH₃ | 4,5-Dihydro-4,5-dimethyl-isoxazol-3-yl |
| 45. | CH₃ | Cl | H | H | C₂H₅ | 4,5-Dihyd ro-isoxazol-3-yl |
| 46. | CH₃ | SO₂CH₃ | H | H | C₂H₅ | 4,5-Dihydro-5-methyl-isoxazol-3-yl |
| 47. | CH₃ | SO₂CH₃ | H | H | C₂H₅ | 4,5-Dihydro-5,5-dimethyl-isoxazol-3-yl |
| 48. | CH₃ | SO₂CH₃ | H | H | C₂H₅ | 4,5-Dihydro-5-ethyl-isoxazol-3-yl |
| 49. | CH₃ | SO₂CH₃ | H | H | C₂H₅ | 4,5-Dihydro-4,5-dimethyl-isoxazol-3-yl |
| 50. | CH₃ | SO₂CH₃ | H | H | i-C₄H₉ | 4,5-Dihydro-isoxazol-3-yl |
| i-C₄H₉: Isobutyl | | | | | | |

Ganz besonders bevorzugt sind die Verbindungen 4-[2-Chlor-3-(4,5-dihydroisoxazol-3-yl)-4-methylsulfonyl-benzoyl]-1-methyl-5-hydroxy-1H-pyrazol, 4-[2-Methyl-3-(4,5-dihydroisoxazol-3-yl)-4-methylsulfonyl-benzoyl]-1-methyl-5-hydroxy-1H-pyrazol, 4-[2-Chlor-3-(3-methyl-isoxazol-5-yl)-4-methylsulfonyl-benzoyl]-1-methyl-5-hydroxy-1H-pyrazol und/oder deren landwirtschaftlich verträglichen Salze.

Im erfindungsgemäßen herbiziden Mittel beträgt das Gewichtsverhältnis der Zusammensetzung der Komponente A zum wenigstens einen Herbizid der Komponente B vorzugsweise 1:200 bis 200:1, besonders bevorzugt 1:100 bis 100:1, stärker bevorzugt 1:20 bis 100:1, noch stärker bevorzugt 1:10 bis 100:1 und insbesondere 1:5 bis 100:1.

Die einzelnen Komponenten A und B des erfindungsgemäßen herbiziden Mittels können, wie bereits ausgeführt, zusammen oder einzeln formuliert und verpackt werden.

Der Landwirt verwendet das herbizide Mittel als Gemisch oder deren einzelne Komponenten vorzugsweise für die Anwendung im Spritztank. Das bedeutet, das erfindungsgemäße herbizide Mittel wird den Pflanzen vornehmlich durch Blattspritzung zugeführt. Dabei kann die Ausbringung z.B. mit Wasser als Trägerstoff durch übliche Spritztechniken mit Spritzbrühe- Mengen von etwa 100 bis 1000 l/ha (z.B. 300 bis 400 l/ha) erfolgen. Eine Anwendung des herbiziden Mittels im sogenannten "Low Volume"- und "Ultra-low-Volume"-Verfahren ist aber ebenso möglich wie ihre Applikation in Form von sogenannten Mikrogranulaten.

Für die Blattspritzung wird dabei das herbizide Mittel, wenn es als Gemisch vorliegt, mit Wasser verdünnt, wobei gegebenenfalls weitere Hilfs- und Zusatzmittel zugegeben werden. Der Landwirt kann aber auch die einzelnen Komponenten A und B des erfindungsgemäßen herbiziden Mittels erst im Spritztank mischen und gegebenenfalls weitere Hilfs- und Zusatzmittel zugeben (Tankmixverfahren).

Beim Tankmixverfahren werden die Komponenten A und B im Spritztank gemischt und mit Wasser auf die gewünschte Anwendungskonzentration gebracht.

Bevorzugt sind die beiden Komponenten des erfindungsgemäßen Mittels separat formuliert und werden erst im Spritztank gemischt.

Zur besseren Verarbeitung können weitere Hilfs- und Zusatzmittel zugegeben werden. Als Hilfs- und Zusatzmittel haben sich folgende Komponenten bewahrt: Lösungsmittel, Entschäumer, Puffersubstanzen, Verdicker, Spreitmittel, kompatibilitätsfördernde Mittel.

Beispiele und Marken für Adjuvants und Hilfs- und Zusatzmittel werden beispielsweise in Farm Chemicals Handbook, 1997; Meister Publishing, 197 S. C10, Kapitel "adjuvant" oder in Weed Control Manual, 1998, S. 86 beschrieben.

Das erfindungsgemäße herbizide Mittel bekämpft unerwünschten Pflanzenwuchs auf Nichtkulturflächen sehr gut, besonders bei hohen Aufwandmengen. In Kulturen wie Weizen, Reis, Mais, Soja und Baumwolle wirkt es gegen Unkräuter und Schadgräser, ohne die Kulturpflanzen nennenswert zuschädigen. Dieser Effekt tritt vor allem bei niedrigen Aufwandmengen auf.

In Abhängigkeit von der jeweiligen Applikationsmethode kann das herbizide Mittel noch in einer weiteren Zahl von Kulturpflanzen zur Beseitigung unerwünschter Pflanzen eingesetzt werden. In Betracht kommen beispielsweise folgende Kulturen : Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Caryailli Boinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthusannuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N. rustica), Olea europaea, Oryza sativa, Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Tritium aestivum, Tritium durum, Vicia faba, Vitis vinifera und Zea mays.

Darüber hinaus kann das herbizide Mittel auch in Kulturen, die durch Züchtung einschließlich gentechnischer Methoden gegen die Wirkung von Herbiziden tolerant sind, verwendet werden. Darüber hinaus kann das herbizide Mittel auch in Kulturen, die durch Züchtung einschließlich gentechnischer Methoden gegen Insekten oder Pilzbefall tolerant sind, verwendet werden.

Die Applikation der herbiziden Mischung kann im Vorlauf- oder im Nachauflaufverfahren erfolgen. Ist das herbizide Mittel für gewisse Kulturpflanzen weniger verträglich, so können Ausbringungstechniken angewandt werden, bei welchen das herbizide Mittel mit Hilfe der Spritzgeräte so gespritzt wird, dass die Blätter der empfindlichen Kulturpflanzen nach Möglichkeit nicht getroffen werden, während das herbizide Mittel auf die Blätter darunter wachsender unerwünschter Pflanzen oder die unbedeckte Bodenfläche gelangen (post-directed, lay-by).

Das herbizide Mittel kann beispielsweise in Form von direktversprühbaren wässrigen Lösungen, Pulvern, Suspensionen, auch hochprozentigen wässrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung des erfindungsgemäßen herbiziden Mittels gewährleisten.

Als inerte Zusatzstoffe kommen im Wesentlichen in Betracht:

Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Paraffin, Tetrahydronaphthalin, alkylierte Naphthaline oder deren Derivate, alkylierte Benzole oder deren Derivate, Alkohole wie Methanol, Ethanol, Propanol, Butanol oder Cyclohexanol, Ketone wie Cyclohexanon oder stark polare Lösungsmittel, z. B. Amine wie N-Methylpyrrolidon oder Wasser.

Wässrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen kann das herbizide Mittel als solches oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z. B. Lignin-, Phenol-, Naphthalin- und Dibutylnaphthalinsulfonsäure, sowie von Fettsäuren, Alkyl-und Alkylarylsulfonaten, Alkyl-, Laurylether und Fettalkoholsulfaten, sowie Salze sulfatierter Hexa-, Hepta und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen des herbiziden Mittels mit einem festen Trägerstoff hergestellt werden.

Granulat, z. B. Umhüllungs-, Imprägnierungs- und Homogengranulate können durch Bindung des herbiziden Mittels an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löss, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nussschalenmehl, Cellulosepulver oder andere feste Trägerstoffe.

Die Konzentrationen des herbiziden Mittels in den anwendungsfertigen Zubereitungen können in weiten Bereichen variiert werden. Im Allgemeinen enthalten die Formulierungen etwa von 0,001 bis 98 Gew.-%, vorzugsweise 0,01 bis 95 Gew.-% des herbiziden Mittels.

Es kann von Nutzen sein, das herbizide Mittel allein oder in Kombination mit weiteren Pflanzenschutzmitteln gemischt, gemeinsam auszubringen, beispielsweise mit Mitteln zur Bekämpfung von Schädlingen oder phytopathogenen Pilzen bzw. Bakterien oder mit wachstumsregulierender Wirkstoffgruppen. Von Interesse ist ferner die Mischbarkeit mit Mineralsalzlösungen, welche zur Behebung von Ernährungs- und Spurenelementmängeln eingesetzt werden. Es können auch weitere Additive wie nicht phytotoxische Öle und Ölkonzentrate zugesetzt werden

Ein weiterer Gegenstand der Erfindung ist die Verwendung des erfindungsgemäßen herbiziden Mittels zur Bekämpfung von unerwünschten Pflanzen. Außerdem ist Gegenstand der Erfindung ein Verfahren zur Bekämpfung von unerwünschtem Pflanzenwuchs, bei dem man die Komponente A und die Komponente B des erfindungsgemäßen herbiziden Mittels gemeinsam oder getrennt, gleichzeitig oder nacheinander auf die unerwünschte Pflanze oder ihren Lebensraum aufbringt.

Die zeitliche Abfolge des Ausbringens der Komponenten A und B ist von untergeordneter Bedeutung. Wesentlich ist lediglich, dass die Zusammensetzung A und das wenigstens eine Herbizid B gleichzeitig am Wirkort vorliegen, d.h. gleichzeitig mit der zu bekämpfenden Pflanze Kontakt haben oder von dieser aufgenommen werden.

Die erfindungsgemäße Booster-Zusammensetzung bleibt bei deutlich niedrigeren Temperaturen als analoge Booster-Zusammensetzungen des Standes der Technik flüssig. Sie ist somit auch bei niedrigen Außentemperaturen problemlos handhabbar und braucht nicht vor Gebrauch erwärmt zu werden. Ihre wirkungsverbessernde Wirkung auf mit ihr gemeinsam verwendete Herbizide ist dabei im Vergleich zu Produkten des Standes der Technik gleich oder sogar besser.

### Beispiele

### 1.) Herstellung der erfindungsgemäßen Zusammensetzung

Durch Mischen der folgenden Komponenten in den angegebenen Gewichtsanteilen wurde eine erfindungsgemäße Zusammensetzung 1 hergestellt:

### Zusammensetzung 1 (erfindungsgemäß)

| | |
|---|---|
| 37,5 Gew.-% | Edenor^{®} Me Ti 05 von Cognis (ein Gemisch verschiedener Fettsäuremethylester; enthält > 71 Gew.-% Methylester von aliphatischen C₁₈-Carbonsäuren, wobei Ölsäuremethylester in min. 65 Gew.-%, bezogen auf das Gesamtgewicht des Gemischs, enthalten ist) |
| 22,5 Gew.-% | Anionisches Tensid (Lutensit^{®} A-EP von BASF SE) |
| 5 Gew.-% | Ölsäure |
| 0,03 Gew.-% | Trimethylsiloxan-Entschäumer |
| ad 100 Gew.-% | Solvesso^{®} 150 oder Solvesso^{®} 150 ND von Exxon Mobile Europe |

Zum Vergleich wurde eine Zusammensetzung mit deutlich geringerem Anteil an aliphatischen C₁₈-Carbonsäuren hergestellt. Diese Zusammensetzung entspricht in etwa der Zusammensetzung Nr.6 der WO 00/53014.

### Zusammensetzung 2 (Vergleich)

| | |
|---|---|
| 37,5 Gew.-% | Stepan^{®} C-65 von Stepan Company (ein Gemisch verschiedener Fettsäuremethylester; enthält 52 Gew.-% Methylester von aliphatischen C₁₈-Carbonsäuren (v.a. Ölsäure) und 45 Gew.-% von aliphatischen C₁₆-Carbonsäuren (v.a. Palmitinsäure)) |
| 22,5 Gew.-% | Anionisches Tensid (Klearfac^{®} AA-270 von BASF Corp.) |
| 5 Gew.-% | Ölsäure |
| 0,03 Gew.-% | Trimethylsiloxan-Entschäumer |
| ad 100 Gew.-% | Aromatic^{®} 150 von Exxon Mobile USA |

### 2.) Verhalten bei niedrigen Temperaturen

Das Präzipitationsverhalten der beiden Zusammensetzungen bei Lagerung über 4 bzw. 8 Wochen bei niedrigen Temperaturen wurde untersucht. Die Ergebnisse sind in nachfolgender Tabelle aufgeführt.

| Lagerzeit: 4 Wochen bei | Zusammensetzung 1 - Aussehen | Zusammensetzung 2 - Aussehen |
|---|---|---|
| +15 °C | klar | klar |
| +10 °C | klar | Präzipitatbildung |
| +5 °C | klar | Präzipitatbildung |
| 0 °C | klar | fest, beige |
| -5 °C | klar | fest, beige |

| Lagerzeit: 8 Wochen bei | Zusammensetzung 1 - Aussehen | Zusammensetzung 2 - Aussehen |
|---|---|---|
| +15 °C | klar | klar |
| +10 °C | klar | Präzipitatbildung |
| +5 °C | klar | Präzipitatbildung |
| 0 °C | klar | fest, beige |
| -5 °C | klar | fest, beige |

Um zu zeigen, dass die Präzipitatbildung tatsächlich auf die Zusammensetzung des Alkylesters zurückzuführen ist, wurden die Produkte Edenor^{®} Me Ti 05 und Stepan^{®} C-65 bei niedrigen Temperaturen gelagert und bezüglich der Bildung fester Bestandteile untersucht. Zu Beginn der Versuche waren beide Produkte klar. Die Ergebnisse sind in folgender Tabelle aufgeführt:

| Lagerzeit: 1 Woche bei | Edenor^{®} Me Ti 05 - Aussehen | Stepan^{®} C-65 - Aussehen |
|---|---|---|
| +20 °C | klar | klar |
| +15 °C | klar | fest |
| +10 °C | klar | fest |
| +5 °C | klar | fest |
| 0 °C | klar | fest |
| -5 °C | klar | fest |
| -10 °C | Flockung | fest |
| -15 °C | fest | fest |

| Lagerzeit: 4 Wochen bei | Edenor^{®} Me Ti 05 - Aussehen | Stepan^{®} C-65 - Aussehen |
|---|---|---|
| +20 °C | klar | Präzipitatbildung |
| +15 °C | klar | fest |
| +10 °C | klar | fest |
| +5 °C | klar | fest |
| 0 °C | klar | fest |
| -5 °C | klar | fest |
| -10 °C | Präzipitatbildung | fest |
| -15 °C | fest | fest |

Der bei -15°C bzw. -10 °C im Produkt Edenor^{®} ME Ti 05 gebildete Feststoff ging innerhalb von 6 Tagen bei 0°C wieder in Lösung. Bei Stepan^{®} C-65 trat dies in keinem Fall auf.

## Patentansprüche

1. Zusammensetzung, bestehend aus
(a) 20 bis 60 Gew.-%, bezogen auf das Gesamtgewicht der Komponenten (a), (b), (c), (d) und (e), wenigstens eines C₁-C₄-Alkylesters wenigstens einer aliphatischen C₁₄-C₂₂-Carbonsäure, wobei die wenigstens eine Carbonsäure zu wenigstens 70 Gew.-% aus aliphatischen Carbonsäuren mit 18 Kohlenstoffatomen besteht,
wobei die aliphatischen Carbonsäuren mit 18 Kohlenstoffatomen der Komponente (a) ausgewählt sind unter gesättigten C₁₈-Carbonsäuren, einfach ungesättigten C₁₈-Carbonsäuren, zweifach ungesättigten C₁₈-Carbonsäuren, dreifach ungesättigten C₁₈-Carbonsäuren und Gemischen davon,
wobei es sich bei den aliphatischen Carbonsäuren mit 18 Kohlenstoffatomen der Komponente (a) um ein Gemisch aus wenigstens einer gesättigten C₁₈-Carbonsäure, wenigstens einer einfach ungesättigten C₁₈-Carbonsäure, wenigstens einer zweifach ungesättigten C₁₈-Carbonsäure und wenigstens einer dreifach ungesättigten C₁₈-Carbonsäure handelt,
wobei das Gemisch der C₁₈-Carbonsäuren die wenigstens eine einfach ungesättigte C₁₈-Carbonsäure in einer Menge von wenigstens 60 Gew.-% bezogen auf das Gesamtgewicht des Gemischs enthält;
(b) 10 bis 40 Gew.-%, bezogen auf das Gesamtgewicht der Komponenten (a), (b), (c), (d) und (e), wenigstens eines anionischen Tensids, das ausgewählt ist unter den Veresterungsprodukten von monohydroxyfunktionellen Alkylpolyethern mit anorganischen mehrprotonigen Säuren;
(c) 2 bis 15 Gew.-%, bezogen auf das Gesamtgewicht der Komponenten (a), (b), (c), (d) und (e), wenigstens einer aliphatischen C₁₄-C₂₂-Carbonsäure;
(d) 0 bis 0,5 Gew.-%, bezogen auf das Gesamtgewicht der Komponenten (a), (b), (c), (d) und (e), gegebenenfalls wenigstens eines Entschäumers; und
(e) wenigstens ein aromatisches Lösungsmittel ad 100 Gew.-%, bezogen auf das Gesamtgewicht der Komponenten (a), (b), (c), (d) und (e).

2. Zusammensetzung nach Anspruch 1, wobei die wenigstens eine aliphatische C₁₄-C₂₂-Carbonsäure der Komponente (a) zu wenigstens 80 Gew.-% aus aliphatischen Carbonsäuren mit 18 Kohlenstoffatomen besteht.

3. Zusammensetzung nach einem der vorhergehenden Ansprüche, wobei es sich bei dem C₁-C₄-Alkylester der Komponente (a) um den Methylester handelt.

4. Zusammensetzung nach einem der vorhergehenden Ansprüche, wobei die wenigstens eine einfach ungesättigte C₁₈-Carbonsäure Ölsäure umfasst.

5. Zusammensetzung nach einem der vorhergehenden Ansprüche, wobei die wenigstens eine gesättigte C₁₈-Carbonsäure Stearinsäure umfasst, die wenigstens eine zweifach ungesättigte C₁₈-Carbonsäure Linolsäure umfasst und die wenigstens eine dreifach ungesättigte C₁₈-Carbonsäure Linolensäure und/oder Elaeostearinsäure umfasst.

6. Zusammensetzung nach einem der vorhergehenden Ansprüche, wobei das wenigstens eine anionische Tensid der Komponente (b) ausgewählt ist unter Phosphorsäureestem wenigstens eines monohydroxyfunktionellen Alkylpolyether, wobei der wenigstens eine Phosphorsäureester wenigstens eines monohydroxyfunktionellen Alkylpolyethers ausgewählt ist unter Phosphorsäurehalbestern von wenigstens einem monohydroxyfunktionellen Alkylpolyether, der durch Oxyalkylierung von C₁₀-C₃₀-Alkanolen mit wenigstens einem C₂-C₄-Alkylenoxid erhältlich ist.

7. Zusammensetzung nach einem der vorhergehenden Ansprüche, wobei die wenigstens eine aliphatische C₁₄-C₂₂-Carbonsäure der Komponente (c) Ölsäure ist

8. Zusammensetzung nach einem der vorhergehenden Ansprüche, wobei das wenigstens eine aromatische Lösungsmittel der Komponente (e) höchstens 1 Gew.-%, bezogen auf das Gesamtgewicht des aromatischen Lösungsmittels, Naphthalin enthält.

9. Zusammensetzung nach einem der vorhergehenden Ansprüche, enthaltend die Komponenten in folgenden Anteilen:
(a) 35 bis 40 Gew.-%, bezogen auf das Gesamtgewicht der Komponenten (a), (b), (c), (d) und (e);
(b) 20 bis 25 Gew.-%, bezogen auf das Gesamtgewicht der Komponenten (a), (b), (c), (d) und (e);
(c) 3 bis 7 Gew.-%, bezogen auf das Gesamtgewicht der Komponenten (a), (b), (c), (d) und (e);
(d) 0 bis 0,5 Gew.-%, bezogen auf das Gesamtgewicht der Komponenten (a), (b), (c), (d) und (e);
(e) ad 100 Gew.-%, bezogen auf das Gesamtgewicht der Komponenten (a), (b), (c), (d) und (e).

10. Herbizides Mittel, enthaltend
(A) eine Zusammensetzung gemäß der Definition in einem der Ansprüche 1 bis 9; und
(B) wenigstens ein Herbizid.

11. Herbizides Mittel nach Anspruch 10, wobei das wenigstens eine Herbizid mit Bleaching-Eigenschaften ausgewählt ist unter Hydroxyphenylpyruvatdioxygenase-Inhibitoren (HPPD-Inhibitoren).

12. Herbizides Mittel nach Anspruch 11, wobei die HPPD-Inhibitoren vom Heterocyclus-Typ ausgewählt sind unter Verbindungen der Formel I 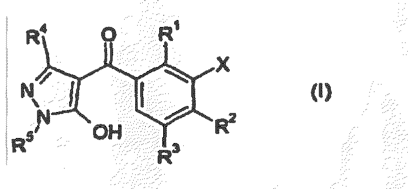 worin
R¹ und R² unabhängig voneinander für Wasserstoff, Halogen, C₁-C₈-Alkyl, C₁-C₆-Haloalkyl, C₁-C₆-Alkoxy, C₁-C₆-Haloalkoxy, C₁-C₆-Alkylthio, C₁-C₆-Haloalkylthio, C₁-C₆-Alkylsulfinyl, C₁-C₆-Haloalkylsulfinyl, C₁-C₆-Alkylsulfonyl oder C₁-C₆-Haloalkylsulfonyl stehen;
R³ für Wasserstoff, Halogen oder C₁-C₆-Alkyl steht;
R⁴ für Wasserstoff oder C₁-C₆-Alkyl steht;
R⁵ für C₁-C₆-Alkyl steht; und
X für einen 5-gliedrigen gesättigten, teilweise ungesättigten oder aromatischen Heterocyclus mit 1,2 oder 3 Heteroatomen als Ringgliedern, die ausgewählt sind unter O, S und N, steht, wobei der Heterocyclus 1, 2, 3 oder 4 Substituenten tragen kann, die ausgewählt sind unter Halogen, C₁-C₆-Alkyl, C₁-C₆-Haloalkyl, C₁-C₆-Alkoxy, C₁-C₆-Haloalkoxy, C₁-C₆-Alkylthio und C₁-C₆-Haloalkylthio;
und die landwirtschaftlich verträglichen Salze davon.

13. Herbizides Mittel nach Anspruch 12, wobei R³ für Wasserstoff steht;
R¹ und R² unabhängig voneinander ausgewählt sind unter Halogen, C₁-C₆-Alkyl, C₁-C₆-Alkylthio, C₁-C₆-Alkylsulfinyl und C₁-C₆-Alkylsulfonyl X ausgewählt ist unter Isoxazolyl, 4,5-Dihydroisoxazolyl und Thiazolyl, die 1, 2 oder 3 Substituenten tragen können, die ausgewählt sind unter Halogen, C₁-C₆-Alkyl, C₁-C₆-Haloalkyl, C₁-C₆-Alkoxy, C₁-C₆-Haloalkoxy, C₁-C₆-Alkylthio und C₁-C₆-Haloalkylthio.

14. Herbizides Mittel nach Anspruch 10, wobei das wenigstens eine Herbizid ein ALS-Inhibitor aus der Gruppe der Imidazolinone ist.

15. Herbizides Mittel nach einem der Ansprüche 10 bis 14, wobei das Gewichtsverhältnis der Komponente A zur Komponente B 1:200 bis 200:1 beträgt.

16. Verwendung des herbiziden Mittels gemäß der Definition in einem der Ansprüche 10 bis 15 zur Bekämpfung von unerwünschten Pflanzen.

17. Verwendung der Zusammensetzung gemäß der Definition in einem der Ansprüche 1 bis 9 zur Verbesserung der Wirkung von Herbiziden, wobei die Herbizide wie in einem der Ansprüche 10 bis 14 definiert sind.

## Claims

1. A composition consisting of
(a) from 20 to 60% by weight, based on the total weight of components (a), (b), (c), (d) and (e), of at least one C₁-C₄-alkyl ester of at least one aliphatic C₁₄-C₂₂-carboxylic acid, where the at least one carboxylic acid consists to at least 70% by weight of aliphatic carboxylic acids having 18 carbon atoms,
where the aliphatic carboxylic acids having 18 carbon atoms of component (a) are selected from saturated C₁₈-carboxylic acids, monounsaturated C₁₈-carboxylic acids, diunsaturated C₁₈-carboxylic acids, triunsaturated C₁₈-carboxylic acids and mixtures thereof,
where the aliphatic carboxylic acids having 18 carbon atoms of component (a) are a mixture of at least one saturated C₁₈-carboxylic acid, at least one monounsaturated C₁₈-carboxylic acid, at least one diunsaturated C₁₈-carboxylic acid and at least one triunsaturated C₁₈-carboxylic acid,
where the mixture of the C₁₈-carboxylic acids contains the at least one monounsaturated C₁₈-carboxylic acid in an amount of at least 60% by weight, based on the total weight of the mixture;
(b) from 10 to 40% by weight, based on the total weight of components (a), (b), (c), (d) and (e), of at least one anionic surfactant which is selected from the esterification products of monohydroxy-functional alkyl polyethers with inorganic polyprotic acids;
(c) from 2 to 15% by weight, based on the total weight of components (a), (b), (c), (d) and (e), of at least one aliphatic C₁₄-C₂₂-carboxylic acid;
(d) from 0 to 0.5% by weight, based on the total weight of components (a), (b), (c), (d) and (e), of optionally at least one antifoam; and
(e) at least one aromatic solvent ad 100% by weight, based on the total weight of components (a), (b), (c), (d) and (e).

2. The composition according to claim 1, where the at least one aliphatic C₁₄-C₂₂-carboxylic acid of component (a) consists to an extent of at least 80% by weight of aliphatic carboxylic acids having 18 carbon atoms.

3. The composition according to either one of the preceding claims, where the C₁-C₄-alkyl ester of component (a) is the methyl ester.

4. The composition according to any one of the preceding claims, where the at least one monounsaturated C₁₈-carboxylic acid comprises oleic acid.

5. The composition according to any one of the preceding claims, where the at least one saturated C₁₈-carboxylic acid comprises stearic acid, the at least one diunsaturated C₁₈-carboxylic acid comprises linoleic acid and the at least one triunsaturated C₁₈-carboxylic acid comprises linolenic acid and/or elaeostearic acid.

6. The composition according to any one of the preceding claims, where the at least one anionic surfactant of component (b) is selected from phosphoric acid esters of at least one monohydroxy-functional alkyl polyether, where the at least one phosphoric acid ester of at least one monohydroxy-functional alkyl polyether is selected from partial phosphoric acid esters of at least one monohydroxy-functional alkyl polyether which is obtainable by oxyalkylation of C₁₀-C₃₀-alkanols with at least one C₂-C₄-alkylene oxide.

7. The composition according to any one of the preceding claims, where the at least one aliphatic C₁₄-C₂₂-carboxylic acid of component (c) is oleic acid.

8. The composition according to any one of the preceding claims, where the at least one aromatic solvent of component (e) comprises at most 1% by weight, based on the total weight of the aromatic solvent, of naphthalene.

9. The composition according to any one of the preceding claims, comprising the components in the following fractions:
(a) 35 to 40% by weight, based on the total weight of components (a), (b), (c), (d) and (e);
(b) 20 to 25% by weight, based on the total weight of components (a), (b), (c), (d) and (e);
(c) 3 to 7% by weight, based on the total weight of components (a), (b), (c), (d) and (e);
(d) 0 to 0.5% by weight, based on the total weight of components (a), (b), (c), (d) and (e);
(e) ad 100% by weight, based on the total weight of components (a), (b), (c), (d) and (e).

10. A herbicidal composition comprising
(A) a composition according to the definition in any one of claims 1 to 9; and
(B) at least one herbicide.

11. The herbicidal composition according to claim 10, where the at least one herbicide with bleaching properties is selected from hydroxyphenylpyruvate dioxygenase inhibitors (HPPD inhibitors).

12. The herbicidal composition according to claim 11, where HPPD inhibitors of the heterocycle type are selected from compounds of the formula I 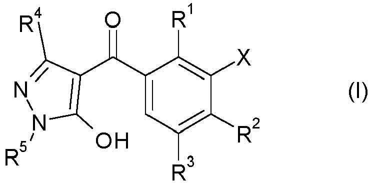 in which
R¹ and R², independently of one another, are hydrogen, halogen, C₁-C₈-alkyl, C₁-C₆-haloalkyl, C₁-C₆-alkoxy, C₁-C₆-haloalkoxy, C₁-C₆-alkylthio, C₁-C₆-haloalkylthio, C₁-C₆-alkylsulfinyl, C₁-C₆-haloalkylsulfinyl, C₁-C₆-alkylsulfonyl or C₁-C₆-haloalkylsulfonyl;
R³ is hydrogen, halogen or C₁-C₆-alkyl;
R⁴ is hydrogen or C₁-C₆-alkyl;
R⁵ is C₁-C₆-alkyl; and
X is a 5-membered saturated, partially unsaturated or aromatic heterocycle with 1, 2 or 3 heteroatoms as ring members which are selected from O, S and N, where the heterocycle can carry 1, 2, 3 or 4 substituents which are selected from halogen, C₁-C₆-alkyl, C₁-C₆-haloalkyl, C₁-C₆-alkoxy, C₁-C₆-haloalkoxy, C₁-C₆-alkylthio and C₁-C₆-haloalkylthio; and the agriculturally compatible salts thereof.

13. The herbicidal composition according to claim 12, where R³ is hydrogen; R¹ and R², independently of one another, are selected from halogen, C₁-C₆-alkyl, C₁-C₆-alkylthio, C₁-C₆-alkylsulfinyl and C₁-C₆-alkylsulfonyl; X is selected from isoxazolyl, 4,5-dihydroisoxazolyl and thiazolyl, which can carry 1, 2 or 3 substituents which are selected from halogen, C₁-C₆-alkyl, C₁-C₆-haloalkyl, C₁-C₆-alkoxy, C₁-C₆-haloalkoxy, C₁-C₆-alkylthio and C₁-C₆-haloalkylthio.

14. The herbicidal composition according to claim 10, where the at least one herbicide is an ALS inhibitor from the group of imidazolinones.

15. The herbicidal composition according to any one of claims 10 to 14, where the weight ratio of component A to component B is 1:200 to 200:1.

16. The use of the herbicidal composition according to the definition in any one of claims 10 to 15 for controlling undesired plants.

17. The use of the composition according to the definition in any one of claims 1 to 9 for improving the effect of herbicides, where the herbicides are as defined in any one of claims 10 to 14.

## Revendications

1. Composition constituée de
(a) 20 à 60 % en poids, par rapport au poids total des composants (a), (b), (c), (d) et (e), d'au moins un ester alkylique en C₁-C₄ d'au moins un acide carboxylique aliphatique en C₁₄-C₂₂, l'au moins un acide carboxylique étant constitué d'au moins 70 % en poids d'acides carboxyliques aliphatiques ayant 18 atomes de carbone,
les acides carboxyliques aliphatiques ayant 18 atomes de carbone du composant (a) étant choisis parmi des acides carboxyliques saturés en C₁₈, des acides carboxyliques mono-insaturés en C₁₈, des acides carboxyliques bi-insaturés en C₁₈, des acides carboxyliques tri-insaturés en C₁₈ et des mélanges de ceux-ci,
les acides carboxyliques aliphatiques ayant 18 atomes de carbone du composant (a) étant un mélange d'au moins un acide carboxylique saturé en C₁₈, d'au moins un acide carboxylique mono-insaturé en C₁₈, d'au moins un acide carboxylique bi-insaturé en C₁₈ et d'au moins un acide carboxylique tri-insaturé en C₁₈,
le mélange des acides carboxyliques en C₁₈ contenant l'au moins un acide carboxylique mono-insaturé en C₁₈ en une quantité d'au moins 60 % en poids, par rapport au poids total du mélange ;
(b) 10 à 40 % en poids, par rapport au poids total des composants (a), (b), (c), (d) et (e), d'au moins un tensioactif anionique qui est choisi parmi les produits d'estérification d'alkylpolyéthers à fonction monohydroxy avec des acides inorganiques polyprotoniques ;
(c) 2 à 15 % en poids, par rapport au poids total des composants (a), (b), (c), (d) et (e), d'au moins un acide carboxylique aliphatique en C₁₄-C₂₂ ;
(d) 0 à 0,5 % en poids, par rapport au poids total des composants (a), (b), (c), (d) et (e), éventuellement d'au moins un antimousse ; et
(e) au moins un solvant aromatique pour un total de 100 % en poids, par rapport au poids total des composants (a), (b), (c), (d) et (e).

2. Composition selon la revendication 1, dans laquelle ledit au moins un acide carboxylique aliphatique en C₁₄-C₂₂ du composant (a) est constitué d'au moins 80 % en poids d'acides carboxyliques aliphatiques ayant 18 atomes de carbone.

3. Composition selon l'une quelconque des revendications précédentes, dans laquelle pour ce qui est de l'ester alkylique en C₁-C₄ du composant (a), il s'agit de l'ester méthylique.

4. Composition selon l'une quelconque des revendications précédentes, dans laquelle ledit au moins un acide carboxylique mono-insaturé en C₁₈ comprend l'acide oléique.

5. Composition selon l'une quelconque des revendications précédentes, dans laquelle ledit au moins un acide carboxylique saturé en C₁₈ comprend l'acide stéarique, ledit au moins un acide carboxylique bi-insaturé en C₁₈ comprend l'acide linoléique et ledit au moins un acide carboxylique tri-insaturé en C₁₈ comprend l'acide linolénique et/ou l'acide élaéostéarique.

6. Composition selon l'une quelconque des revendications précédentes, dans laquelle ledit au moins un tensioactif anionique du composant (b) est choisi parmi des esters d'acide phosphorique d'au moins un alkylpolyéther à fonction monohydroxy, ledit au moins un ester d'acide phosphorique d'au moins un alkylpolyéther à fonction monohydroxy étant choisi parmi des hémiesters d'acide phosphorique avec au moins un alkylpolyéther à fonction monohydroxy qui peut être obtenu par oxyalkylation d'alcanols en C₁₀-C₃₀ avec au moins un oxyde d'alkylène en C₂-C₄.

7. Composition selon l'une quelconque des revendications précédentes, dans laquelle ledit au moins un acide carboxylique aliphatique en C₁₄-C₂₂ du composant (c) est l'acide oléique.

8. Composition selon l'une quelconque des revendications précédentes, dans laquelle ledit au moins un solvant aromatique du composant (e) contient au maximum 1 % en poids, par rapport au poids total du solvant aromatique, de naphtalène.

9. Composition selon l'une quelconque des revendications précédentes, contenant les composants en les proportions suivantes :
(a) 35 à 40 % en poids, par rapport au poids total des composants (a), (b), (c), (d) et (e) ;
(b) 20 à 25 % en poids, par rapport au poids total des composants (a), (b), (c), (d) et (e) ;
(c) 3 à 7 % en poids, par rapport au poids total des composants (a), (b), (c), (d) et (e) ;
(d) 0 à 0,5 % en poids, par rapport au poids total des composants (a), (b), (c), (d) et (e) ;
(e) quantité restante pour atteindre 100 % en poids, par rapport au poids total des composants (a), (b), (c), (d) et (e) .

10. Produit herbicide, contenant
(A) une composition selon la définition dans l'une quelconque des revendications 1 à 9, et
(B) au moins un herbicide.

11. Produit herbicide selon la revendication 10, dans lequel ledit au moins un herbicide à propriétés de blanchiment est choisi parmi des inhibiteurs d'hydroxyphénylpyruvate dioxygénase (inhibiteurs de HPPD) .

12. Produit herbicide selon la revendication 11, dans lequel les inhibiteurs de HPPD du type hétérocyclique sont choisis parmi des composés de formule I 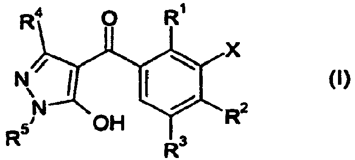 dans laquelle
R¹ et R² représentent indépendamment l'un de l'autre hydrogène, halogène, alkyle en C₁-C₈, halogénoalkyle(C₁-C₆), alcoxy en C₁-C₆, halogénoalcoxy(C₁-C₆), alkyl(C₁-C₆)thio, halogénoalkyl (C₁-C₆) thio, alkyl (C₁-C₆) sulfinyle, halogénoalkyl (C₁-C₆) sulfinyle, alkyl (C₁-C₆) sulfonyle ou halogénoalkyl(C₁-C₆)sulfonyle ;
R³ représente hydrogène, halogène ou alkyle en C₁-C₆;
R⁴ représente hydrogène ou alkyle en C₁-C₆;
R⁵ représente alkyle en C₁-C₆ ; et
X représente un hétérocycle à 5 chaînons saturé, partiellement insaturé ou aromatique, comportant 1, 2 ou 3 hétéroatomes en tant que chaînons formant le cycle, qui sont choisis parmi O, S et N, l'hétérocycle pouvant porter 1, 2, 3 ou 4 substituants qui sont choisis parmi halogène, alkyle en C₁-C₆, halogénoalkyle(C₁-C₆), alcoxy en C₁-C₆, halogénoalcoxy (C₁-C₆), alkyl (C₁-C₆) thio et halogénoalkyl(C₁-C₆)thio ;
et leurs sels acceptables en agriculture.

13. Produit herbicide selon la revendication 12, dans lequel R³ représente hydrogène ; R¹ et R² sont choisis indépendamment l'un de l'autre parmi un halogène, alkyle en C₁-C₆, alkyl (C₁-C₆) thio, alkyl(C₁-C₆) sulfinyle et alkyl(C₁-C₆)sulfonyle
X est choisi parmi les groupes isoxazolyle, 4,5-dihydro-isoxazolyle et thiazolyle, qui peuvent porter 1, 2 ou 3 substituants qui sont choisis parmi halogène, alkyle en C₁-C₆, halogénoalkyle(C₁-C₆), alcoxy en C₁-C₆, halogénoalcoxy(C₁-C₆), alkyl (C₁-C₆) thio et halogénoalkyl(C₁-C₆) thio.

14. Produit herbicide selon la revendication 10, dans lequel ledit au moins un herbicide est un inhibiteur d'ALS du groupe des imidazolinones.

15. Produit herbicide selon l'une quelconque des revendications 10 à 14, dans lequel le rapport pondéral du composant A au composant B est de 1 : 200 à 200 : 1.

16. Utilisation du produit herbicide selon la définition dans l'une quelconque des revendications 10 à 15, pour la lutte contre des plantes indésirables.

17. Utilisation de la composition selon la définition dans l'une quelconque des revendications 1 à 9 pour l'amélioration de l'efficacité d'herbicides, les herbicides étant tels que définis dans l'une quelconque des revendications 10 à 14.
